(19) Europäisches Patentamt / European Patent Office / Office européen des brevets

(11) **EP 4 642 118 A1**

(12) **EUROPEAN PATENT APPLICATION**
published in accordance with Art. 153(4) EPC

(43) Date of publication:
**29.10.2025 Bulletin 2025/44**

(21) Application number: **23905059.4**

(22) Date of filing: **17.03.2023**

(51) International Patent Classification (IPC):
***H04W 64/00*** (2009.01)

(52) Cooperative Patent Classification (CPC):
**H04W 64/003; H04L 5/0048; H04W 64/00; H04W 92/18**

(86) International application number:
**PCT/CN2023/082148**

(87) International publication number:
**WO 2024/130867 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.12.2022 CN 202211652480**

(71) Applicant: **Quectel Wireless Solutions Co., Ltd.**
**Shanghai 201601 (CN)**

(72) Inventors:
• **ZHAO, Zheng**
**Shanghai 201601 (CN)**
• **LYU, Ling**
**Shanghai 201601 (CN)**
• **YANG, Zhongzhi**
**Shanghai 201601 (CN)**

(74) Representative: **Fish & Richardson P.C.**
**Highlight Business Towers**
**Mies-van-der-Rohe-Straße 8**
**80807 München (DE)**

(54) **METHOD AND APPARATUS FOR POSITIONING**

(57) The present application provides a method and apparatus for positioning. The method comprises: a first auxiliary positioning device determining a positioning reference signal, the positioning reference signal being used for determining first relative position information for the first auxiliary positioning device and a device to be measured; and the first auxiliary positioning device using a sidelink to transmit or measure the positioning reference signal; wherein the first relative position information is used for determining first position information of the device to be measured. In the embodiments of the present application, the distance between the auxiliary positioning device and the device to be measured is relatively close, and the likelihood that the positioning reference signal transmitted via a sidelink comprises a direct path signal is relatively high. Solving for a position on the basis of the positioning reference signal results in more-accurate measurement of the first relative position information, thus helping to improve the positioning accuracy of the device to be measured.

First auxiliary positioning device | to-be-tested device

S310, determine a positioning reference signal

S320, send or measure the positioning reference signal by using a sidelink

FIG. 3

## Description

## CROSS-REFERENCE TO RELATED APPLICATIONS

The present application claims priority to Chinese Patent Application No. 2022116524800, filed with the China National Intellectual Property Administration on December 21, 2022 and entitled "METHOD AND APPARATUS FOR POSITIONING", which is incorporated herein by reference in its entirety.

## TECHNICAL FIELD

The present application relates to the field of communications technologies, and more specifically, to a positioning method and apparatus.

## BACKGROUND

In a positioning technology of a communications system, positioning accuracy of a line of sight (line of sight, LoS) scenario is far higher than positioning accuracy of a non line of sight (non line of sight, NLoS) scenario. After a positioning reference signal is transmitted between a to-be-tested device and multiple network side devices, a positioning calculating unit selects a signal of the LoS scenario from the multiple positioning reference signals, and then performs position calculating, so as to improve positioning accuracy. However, there is great uncertainty in identifying the LoS signal. If the signal for performing the location calculation comes from the NLoS scenario, accuracy of the calculated location is severely reduced.

## SUMMARY

Embodiments of the present application provide a positioning method and apparatus, so as to improve positioning accuracy of a to-be-tested device. Various aspects of the embodiments of the present application are described below.

According to a first aspect, a positioning method is provided. The method includes: determining, by a first auxiliary positioning device, a positioning reference signal, where the positioning reference signal is used to determine first relative location information of the first auxiliary positioning device and a to-be-tested device; and sending or measuring, by the first auxiliary positioning device, the positioning reference signal by using a sidelink. The first relative location information is used to determine first location information of the to-be-tested device.

According to a second aspect, a positioning method is provided. The method includes: determining, by a to-be-tested device, a positioning reference signal, where the positioning reference signal is used to determine first relative location information of a first auxiliary positioning device and the to-be-tested device; and measuring or sending, by the to-be-tested device, the positioning reference signal by using a sidelink. The first relative location information is used to determine first location information of the to-be-tested device.

According to a third aspect, a positioning method is provided. The method includes: receiving, by a network side device, first relative location information of a first auxiliary positioning device and a to-be-tested device, where the first relative location information is used to determine first location information of the to-be-tested device. The first relative location information is determined based on a positioning reference signal, and the positioning reference signal is transmitted by using a sidelink.

According to a fourth aspect, a positioning apparatus is provided, where the apparatus is a first auxiliary positioning device. The first auxiliary positioning device includes: a determining unit, determining a positioning reference signal, where the positioning reference signal is used to determine first relative location information of the first auxiliary positioning device and a to-be-tested device; and a communications unit, sending or measuring the positioning reference signal by using a sidelink. The first relative location information is used to determine first location information of the to-be-tested device.

According to a fifth aspect, a positioning apparatus is provided, where the apparatus is a to-be-tested device. The to-be-tested device includes: a determining unit, determining a positioning reference signal, where the positioning reference signal is used to determine first relative location information of a first auxiliary positioning device and the to-be-tested device; and a communications unit, measuring or sending the positioning reference signal by using a sidelink. The first relative location information is used to determine first location information of the to-be-tested device.

According to a sixth aspect, a positioning apparatus is provided, where the apparatus is a network side device. The network side device includes a receiving unit, receiving first relative location information of a first auxiliary positioning device and a to-be-tested device, where the first relative location information is used to determine first location information of the to-be-tested device. The first relative location information is determined based on a positioning reference signal, and the positioning reference signal is transmitted by using a sidelink.

According to a seventh aspect, a communications apparatus is provided, including a memory and a processor. The memory is configured to store a program, and the processor is configured to invoke the program in the memory to perform the method according to any one of the first aspect to the third aspect.

According to an eighth aspect, an apparatus is provided. The apparatus includes a processor, invoking a program from a memory to perform the method according to any one of the first aspect to the third aspect.

According to a ninth aspect, a chip is provided.

The chip includes a processor, invoking a program from a memory, so that a device installed with the chip performs the method according to any one of the first aspect to the third aspect.

According to a tenth aspect, a computer readable storage medium storing a program is provided. The program causes a computer to perform the method according to any one of the first aspect to the third aspect.

According to an eleventh aspect, a computer program product is provided, including a program. The program causes a computer to perform the method according to any one of the first aspect to the third aspect.

According to a twelfth aspect, a computer program is provided. The computer program causes a computer to perform the method according to any one of the first aspect to the third aspect.

In embodiments of the present application, a first auxiliary positioning device located around a to-be-tested device performs auxiliary positioning on the to-be-tested device. Because the first auxiliary positioning device and the to-be-tested device are relatively close to each other, a positioning reference signal transmitted by using the sidelink includes a line of sight signal with a high probability. It follows that, when location calculation is performed based on the positioning reference signal, the determined first relative location information is relatively accurate, thereby being beneficial to improve positioning accuracy of the to-be-tested device.

**BRIEF DESCRIPTION OF THE DRAWINGS**

FIG. 1 shows a wireless communications system to which an embodiment of the present application is applied.

FIG. 2 shows a communications system adopting a related positioning method.

FIG. 3 is a schematic flowchart of a positioning method according to an embodiment of the present application.

FIG. 4 is a schematic flowchart of a positioning method according to another embodiment of the present application.

FIG. 5 is a schematic flowchart of a positioning method according to still another embodiment of the present application.

FIG. 6 is a schematic flowchart of a possible implementation according to an embodiment of the present application.

FIG. 7 is a schematic flowchart of another possible implementation according to an embodiment of the present application.

FIG. 8 is a schematic structural diagram of a positioning apparatus according to an embodiment of the present application.

FIG. 9 is a schematic structural diagram of another positioning apparatus according to an embodiment of the present application.

FIG. 10 is a schematic structural diagram of still another positioning apparatus according to an embodiment of the present application.

FIG. 11 is a schematic structural diagram of a communications apparatus according to an embodiment of the present application.

**DETAILED DESCRIPTION OF THE EMBODIMENTS**

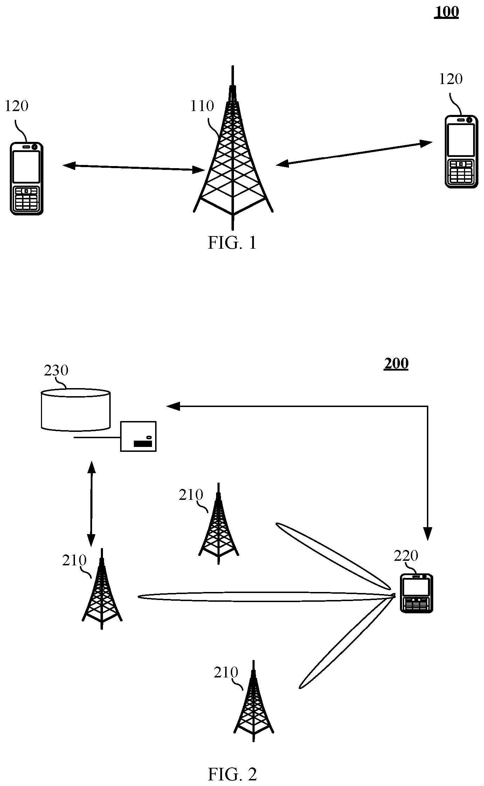

Technical solutions in the present application are described below with reference to the accompanying drawings. For facilitating understanding, terms and communication processes involved in the present application are first described below with reference to FIG. 1 and FIG. 2.

**Communication System**

FIG. 1 shows a wireless communication system 100 to which an embodiment of the present application is applicable. The wireless communication system 100 may include a base station 110 and a terminal device 120. The base station 110 may be a device in communication with the terminal device 120. The base station 110 may provide communication coverage for a specific geographic area, and may communicate with the terminal device 120 located within the coverage.

FIG. 1 exemplarily shows one base station and two terminals. Optionally, the wireless communication system 100 may include a plurality of base stations, and another quantity of terminal devices may be included in the coverage of each base station, which is not limited in embodiments of the present application.

Optionally, the wireless communication system 100 may further include other network entities such as a network controller and a mobility management entity, which is not limited in embodiments of the present application.

It should be understood that the technical solutions in the embodiments of the present application may be applied to various communications systems, for example, a fifth generation communications (5th-generation, 5G) system, a new radio (new radio, NR) system, a long term evolution (long term evolution, LTE) system, an LTE frequency division duplex (frequency division duplex, FDD) system, an LTE time division duplex (time division duplex, TDD) system, a global system for mobile communication (global system of mobile communication, GSM) system, a code division multiple access (code division multiple access, CDMA) system, a wideband code division multiple access (wideband code division multiple access, WCDMA) system, a general packet radio service (general packet radio service, GPRS) system, an advanced long term evolution (advanced long term evolution, LTE-A) system, an evolved NR system, an LTE-based access to unlicensed spectrum (LTE-based access to unlicensed spectrum, LTE-U) system, an NR-based access to unlicensed spectrum (NR-based access to unlicensed spectrum, NR-U) system, a non terrestrial network (non terrestrial network, NTN) system, a universal mobile telecommunication system (universal mobile telecommunication system, UMTS), a wireless local area network (wireless local area network, WLAN), wireless fidelity (wireless fidelity, WiFi), or another communications system. The technical solutions provided in the present application may be further applied to a future communication system, such as a sixth generation mobile communications system or a satellite communications system.

The terminal device in embodiments of the present application may also be referred to as user equipment (user equipment, UE), an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device in embodiments of the present application may be a device providing a user with voice and/or data connectivity and capable of connecting people, objects, and machines, such as a handheld device or vehicle-mounted device having a wireless connection function. The terminal device in the embodiments of the present application may be a mobile phone (mobile phone), a tablet computer (pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, the UE may function as a base station. For example, the UE may function as a scheduling entity, and provides a sidelink signal between UEs in V2X, D2D, or the like. For example, a cellular phone and a vehicle communicate with each other by using a sidelink signal. A cellular phone and a smart household device communicate with each other without relaying a communication signal through a base station.

In embodiments of the present application, the terminal device may be a STATION (STATION, ST) in the WLAN, and may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device or another processing device connected to a wireless modem, an in-vehicle device, a wearable device, a next-generation communications system such as a terminal device in an NR network, or a terminal device in a future evolved public land mobile network (public land mobile network, PLMN), and so on.

The base station in embodiments of the present application may be a device communicating with a terminal device, and the base station may also be referred to as an access network device, a radio access network device, or a network device. The base station in the embodiments of the present application may be a radio access network (radio access network, RAN) node (or device) that connects the terminal device to a wireless network. The base station may broadly cover the following various names, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (baseband unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. Alternatively, the base station may be a communication module, a modem, or a chip arranged in the device or apparatus described above. Alternatively, the base station may be a mobile switching center, a device that functions as a base station in device to device D2D, vehicle-to-everything (V2X), and machine-to-machine (machine-to-machine, M2M) communications, a network side device in a 6G network, a device that functions as a base station in a future communication system, or the like. The base station may support networks with a same access technology or different access technologies. A specific technology and specific device used by the base station are not limited in the embodiments of the present application.

The base station may be a fixed or mobile base station. For example, a helicopter or an unmanned aerial vehicle may function as a mobile base station, and one or more cells may move according to a position of the mobile base station. In another example, the helicopter or the unmanned aerial vehicle may function as a device in communication with another base station.

In some deployments, the base station in the embodiments of the present application may be a CU or a DU, or the base station includes a CU and a DU. The gNB may further include an AAU.

The base station and the terminal device may be deployed on land, including an indoor or outdoor scenario and a handheld or vehicle-mounted scenario, or may be deployed on water, or may be deployed on an airplane, a balloon, or a satellite in the air. In the embodiments of the present application, the scenarios in which the base station and the terminal device are located are not limited.

In embodiments of the present application, a base station may provide a service for a cell. The terminal device communicates with the base station by using a transmission resource (for example, a frequency domain resource or a spectrum resource) used by the cell. The cell may be a cell corresponding to the base station. The cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have a small coverage area and a low transmit power, and are applicable to providing a high-rate data transmission service.

In embodiments of the present application, the wireless communications system shown in FIG. 1 may further include another network entity such as a mobility management entity (mobility management entity, MME) and an access and mobility management function (access and mobility management function, AMF). This is not limited in this embodiment of the present application.

## Positioning technology in the communications system

Reference is made to FIG. 2. A communications system 200 may include a positioning device 230. The positioning device 230 may be configured to determine location information of the terminal device. The positioning device 230 may be located in a core network. The positioning device 230 may also be referred to as a positioning server. The NR system is used as an example. The positioning device 230 may be a location management function (location management function, LMF). Another communications system is used as an example. The positioning device 230 may be a location management unit (location management unit, LMU), a location management center (location management center, LMC), or an evolved serving mobile location center (evolved serving mobile location center, E-SMLC). It may be understood that the positioning device 230 may be another network element, node, or device for determining location information of the terminal device. For example, the positioning device 230 may be a network element or node for determining location information of the terminal device in a future communications system. A name of the positioning device is not limited in embodiments of the present application.

Positioning in the communications system 200 includes uplink positioning and downlink positioning. In some communication systems (such as the NR system), downlink positioning is performed based on a positioning reference signal (positioning reference signal, PRS). The PRS, also referred to as a downlink positioning reference signal (downlink positioning reference signal, DL-PRS), is a reference signal for implementing a positioning function. For example, in a downlink positioning process, the terminal device 220 may first measure a PRS sent by a serving cell and a neighboring cell (or referred to as a neighboring cell), and estimate related information of positioning measurement. Then, the terminal device 220 may report the related information of the positioning measurement to the positioning device 230 as a measurement result of the PRS. The positioning device 230 may calculate the location of the terminal device 220 according to the positioning measurement related information reported by the terminal device 220, so as to obtain the location information of the terminal device 220. For example, the positioning device 230 may calculate the location information of the terminal device 220 based on a three-side positioning method or a triangular positioning method.

In some communication systems (such as the NR system), uplink positioning is performed based on an SRS. For example, in an uplink positioning process, the terminal device 220 sends a sounding reference signal (sounding reference signal, SRS). The base station 210 (a base station of a serving cell and a base station of a neighboring cell) may obtain a measurement result according to an SRS sent by the terminal. The measurement result of the SRS may include related information of positioning measurement. Then, the base station 210 may send the positioning measurement related information to the positioning device 230. The positioning device 230 may calculate the location of the terminal device 220 according to the positioning measurement related information reported by the base station 210, so as to obtain the location information of the terminal device 220. For example, the positioning device 230 may calculate the location information of the terminal device 220 by using a three-side positioning method or a triangular positioning method.

The positioning measurement related information may include one or more of the following information: time information, distance information, power information, or angle information. More specifically, the positioning measurement related information may include one or more of the following information: a time difference of arrival (time difference of arrival, TDOA), an angle difference of arrival (angle difference of arrival, ADOA), a reference signal receive power (reference signal receive power, RSRP), and the like.

As shown in FIG. 2, the base station 210 and the terminal device 220 may respectively serve as a transmitting end and a receiving end for performing transmission of a reference signal. In a wireless propagation environment, a signal sent by the transmitting end reaches the receiving end via multiple paths. Some of the multiple paths are line of sight and others of the multiple paths are non line of sight. A line of sight signal usually arrives directly at the receiving end and a non line of sight signal is refracted or diffracted to reach the receiving end. Therefore, a propagation delay of the line of sight is relatively short and a power thereof is relatively strong, and the line of sight signal becomes a first path signal, that is, a first path, received by the receiving end.

When the terminal device 220 is to be positioned based on the propagation delay, an arrival time instant of the first path needs to be estimated. A propagation delay of the signal is calculated according to the time instant in combination with other information, so as to obtain an estimated distance between the transmitting end and the receiving end. However, if the first path received by the receiving end is not the line of sight or is not a strongest path, the propagation delay estimated by the receiving end can not reflect a distance between the transmitting end and the receiving end. That is, positioning accuracy of a scenario with the line of sight is far higher than positioning accuracy of a scenario without the line of sight.

Reference is made to FIG. 2 again. In order to improve positioning accuracy of the terminal device 220, the terminal device 220 receives pilot signals sent by multiple base stations 210, or multiple base stations 210 receive pilot signals sent by the terminal device 220. The positioning server selects signals of the LoS scenario from these signals, and performs location calculation. For example, a quantity of base stations 210 that send signals to the terminal device 220 may be greater than three as shown in FIG. 2.

Enough transmitting or receiving ends need to be provided to perform LoS selection, and LoS identification is a difficulty in positioning processing, resulting in great uncertainty. Therefore, for research project on Rel-17 in the 3rd generation partnership project (3rd generation partnership project, 3GPP), discussion on LoS scenario recognition has been performed for a long time. After the project initiation discussion, a special project is established to discuss LoS identification.

In performing the location calculation, if the angle or the delay estimation comes from the NLoS scenario, a result of the NLoS scenario seriously reduces accuracy of the calculated location.

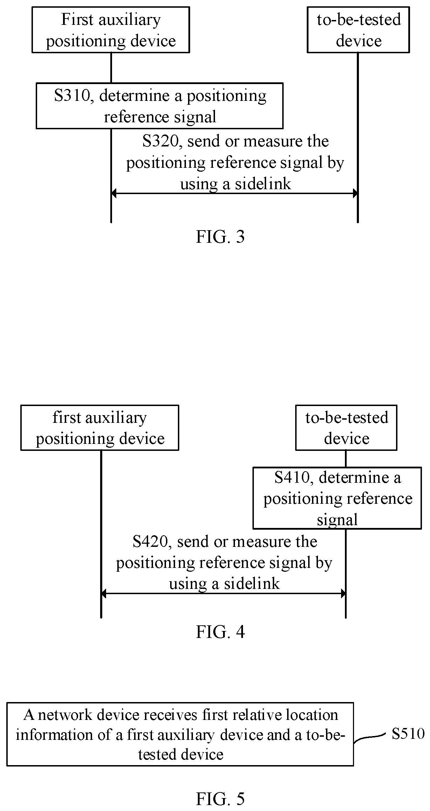

Based on this, an embodiment of the prsent application provides a positioning method, which may be used to position a to-be-tested device. In the method, a communications device located around the to-be-tested device serves as an auxiliary positioning device. Because a distance between the auxiliary positioning device and the to-be-tested device is relatively short, visual range propagation (line of sight propagation) is performed between the auxiliary positioning device and the to-be-tested device with a high probability. Therefore, a distance between the to-be-tested device and the auxiliary positioning device measured based on a sidelink is relatively accurate, thereby being beneficial to improve positioning accuracy of the to-be-tested device. With reference to FIG. 3, the following describes in detail a positioning method according to an embodiment of the present application.

The method shown in FIG. 3 is described from a perspective of interaction between the first auxiliary positioning device and the to-be-tested device. The first auxiliary positioning device and the to-be-tested device may communicate with each other, or may separately communicate with a network side device. The first auxiliary positioning device and the to-be-tested device may be any terminal device mentioned above. The first auxiliary positioning device and the to-be-tested device may be within coverage of a same base station (for example, a same serving cell), may be within different network coverage, or may not be within network coverage.

The first auxiliary positioning device may be one auxiliary positioning device of the multiple auxiliary positioning devices located around the to-be-tested device, with a high probability of visual range propagation. In some embodiments, multiple auxiliary positioning devices may be multiple first auxiliary positioning devices of a same type. For example, the multiple auxiliary positioning devices may be nodes of multiple sidelink communications systems. In some embodiments, multiple auxiliary positioning devices may be auxiliary positioning devices of different types. The types are described below.

In a possible implementation of some embodiments of the present application, the first auxiliary positioning device may estimate a distance between the first auxiliary positioning device and the to-be-tested device by using a positioning technology of sidelink communication, thereby assisting the network side device to estimate a location of the to-be-tested device.

The first auxiliary positioning device may be a node or a reference terminal device for positioning. For example, the first auxiliary positioning device may be a deployed reference node, a dedicated module device, or a sidelink reference node or a terminal device that performs sidelink communication.

In some embodiments, the first auxiliary positioning device may be a positioning reference unit (positioning reference unit, PRU), or may be a device that implements a PRU function. For example, the first auxiliary positioning device may be a roadside unit for positioning in a sidelink communications system. For another example, the first auxiliary positioning device may be a dedicated PRU.

In some embodiments, the first auxiliary positioning device may be a fixed node around the to-be-tested device. For example, the first auxiliary positioning device may be a roadside unit in a sidelink communications system. For example, the first auxiliary positioning device may be a parking pile, a charging pile, or a dedicated positioning reference node. For another example, the first auxiliary positioning device may be a customer premise equipment (customer premise equipment, CPE) with a positioning function in a house or a building, and may track an object in a specific range. In some embodiments, the first auxiliary positioning device may be a device moving around the to-be-tested device. For example, the first auxiliary positioning device may be a positioning relay installed in a freight car. By recording a location of each product, a relative location between different products may be periodically reported. For example, a moving vehicle in a sidelink communications system may form a line of sight scenario with a to-be-tested device within a specific range, thereby obtaining higher positioning accuracy.

In a possible implementation, when the first auxiliary positioning device is a node of the sidelink communications system, there may be enough auxiliary positioning devices around the to-be-tested device. Accuracy of the calculated location is improved by using estimated values provided by multiple auxiliary positioning devices, so that the to-be-tested device obtains location coordinates with higher accuracy.

The location information of the first auxiliary positioning device may be absolute location information of the first auxiliary positioning device, may be location information of the first auxiliary positioning device relative to another device, or may be auxiliary location information for determining a location of the first auxiliary positioning device. The auxiliary location information is, for example, an initial position and movement information of the first auxiliary positioning device or a motion rule of the first auxiliary positioning device. The motion rule includes a moving speed and or a track, such as reference location information of the first auxiliary positioning device.

The first auxiliary positioning device may perform auxiliary positioning on the to-be-tested device by using the location information of the first auxiliary positioning device. How to determine the location information of the first auxiliary positioning device is described in detail below. It should be noted that power consumption of the first auxiliary positioning device may be caused when the first auxiliary positioning device performs auxiliary positioning. For example, when the auxiliary positioning device is a mobile phone terminal, a power consumption problem of the first auxiliary positioning device may be resolved by management of an operator.

The to-be-tested device may be a to-be-tested user, a to-be-tested node, or a to-be-tested terminal device that needs to be positioned. In some embodiments, the to-be-tested device may be any one of the foregoing terminal devices to be positioned. In some embodiments, the to-be-tested device may further be a goods in a freight car or an article in a home mentioned above, and the goods or the article may have a function of communicating with another communications device.

In some embodiments, the to-be-tested device may send a positioning service request to the auxiliary positioning device or the network side device to determine an absolute or relative position of the auxiliary positioning device or the network side device. In some embodiments, the network side device may determine, according to an actual situation or in response to another user request, a to-be-tested device that needs to be positioned. In some embodiments, the auxiliary positioning device may be a PRU, or the to-be-tested device may be an anchor node in positioning.

It may be learned from the foregoing that relative location information between the first auxiliary positioning device and the to-be-tested device may be fed back to a network side device, and the network side device may estimate a location of the to-be-tested device by using the information. The network side device may refer to any base station mentioned above or a device in a core network that participates in positioning. That is, the network side device may include a base station and a positioning device of a core network. The base station corresponds to a serving cell of the device to be tested. The positioning device of the core network is, for example, a positioning server shown in FIG. 2.

Reference is made to FIG. 3. In step S310, determining a positioning reference signal by the first auxiliary positioning device.

The positioning reference signal may be a reference signal (reference signal, RS) that supports downlink positioning, or may be a pilot signal that may measure a relative position between the to-be-tested device and the first auxiliary positioning device. A type of the positioning reference signal is not limited herein.

The positioning reference signal may include a line of sight signal, so as to ensure accuracy for estimating a relative distance between the to-be-tested device and the first auxiliary positioning device. In some embodiments, signal transmission between the to-be-tested device and the first auxiliary positioning device is performed in a line of sight scenario, and a first path of a positioning reference signal sent or received by the first auxiliary positioning device is a line of sight.

In a possible implementation, when the location of the first auxiliary positioning device is known, positioning of the to-be-tested device may be calibrated. In another possible implementation, there is a good propagation environment between the first auxiliary positioning device and the to-be-tested device, for example, a path loss is small, and thus accuracy of the estimated relative distance can also be ensured.

The positioning reference signal may be transmitted by using a sidelink (sidelink, SL). The sidelink may also be referred to as a direct connection path. The sidelink communication may also be referred to as proximity services (proximity services, ProSe) communication, single-side communication, device to device (device to device, D2D) communication or the like. In some embodiments, the first auxiliary positioning device and the to-be-tested device may be separately a receiving terminal and a sending terminal of a sidelink. Both the first auxiliary positioning device and the to-be-tested device may send a positioning reference signal by using a sidelink resource. The sidelink resource is, for example, a time-frequency resource and/or a spatial domain resource in a resource pool.

The positioning reference signal may be transmitted by using a transmission resource pool. The process of determining, by the first auxiliary positioning device, a positioning reference signal may include: determining a transmission resource pool of the positioning reference signal. The transmission resource pool of the positioning reference signal may be configured by the network side device, or may be configured by the auxiliary positioning device. The auxiliary positioning device that performs resource configuration may be referred to as a second auxiliary positioning device. The second auxiliary positioning device may be the first auxiliary positioning device, or may be another device in multiple auxiliary positioning devices located around the to-be-tested device.

In some embodiments, the network side device indicates the transmission resource pool of the positioning reference signal in multiple configuration manners. For example, the network side device may configure the transmission resource according to the ID of the first auxiliary positioning device reported by the to-be-tested device. For example, the network side device may configure the transmission resource according to second location information of the to-be-tested device. The second location information of the to-be-tested device is described in detail below.

In a possible implementation, the transmission resource pool may be configured by the base station. In a possible implementation, the transmission resource pool may be coordinated by the serving cell, and is notified to the to-be-tested device. For example, after determining the resource pool for transmitting the RS, the serving cell may notify the first auxiliary positioning device of the transmission resource pool, and notify the to-be-tested device of RS information for positioning.

In a possible implementation, the transmission resource pool may be notified by a positioning server. For example, after determining the resource pool for transmitting the RS, the positioning server may notify the first auxiliary positioning device of configuration information of the resource pool, and instruct the to-be-tested device to receive the RS.

In some embodiments, the auxiliary positioning device determines the transmission resource pool of the positioning reference signal in multiple manners. For example, the transmission resource pool is determined according to an ID of a zone where the first auxiliary positioning device is located. For example, the transmission resource pool is determined according to a synchronization signal/physical broadcast channel (synchronization signal/physical broadcast channel, SSS/PBCH) (SSB for short) index of the first auxiliary positioning device. The SSB index is an SSB sequence number. In the NR, the SSB is associated with a beam direction. When the transmission resource pool is determined according to the SSB of the first auxiliary positioning device, a group of resource pools are allocated in each beam direction. A user selects a resource from the resource pool, so as to avoid overlapping with a resource pool corresponding to a neighboring beam. In this case, when the user randomly selects a pilot resource, a probability of collision with a neighboring beam resource can be reduced. A process of determining a resource from the transmission resource pool according to the SSB index of the first auxiliary positioning device may be implemented as follows. When the user accesses the network, the user reports an SSB sequence number; the base station numbers all users that report a same SSB sequence number, and notifies the terminal of the number; and the terminal determines a resource according to the number. In this way, a probability of collision between resources corresponding to the same SSB can be reduced. For example, the transmission resource pool is determined according to timing advance (timing advance) TA of the first auxiliary positioning device. For example, the transmission resource pool is determined according to an ID of the first auxiliary positioning device.

In a possible implementation, the first auxiliary positioning device may select a sidelink resource from the resource pool to send a positioning reference signal. For example, after the serving cell or the positioning server instructs the first auxiliary positioning device to perform positioning, the first auxiliary positioning device may select a resource from a specific resource pool to send a reference signal.

The positioning reference signal may be used to determine first relative location information of the first auxiliary positioning device and the to-be-tested device, and the first relative location information is used to determine first location information of the to-be-tested device.

The first relative location information may be information indicating a relative position relationship, such as a relative distance, a relative angle, or a direction between the auxiliary positioning device and the to-be-tested device. For example, the first relative location information may be a signal propagation delay between the auxiliary positioning device and the to-be-tested device, or a signal propagation angle.

In step S320, sending or measuring the positioning reference signal by using a sidelink by the first auxiliary positioning device.

In a case that the first auxiliary positioning device is a transmitting end of the positioning reference signal, the first auxiliary positioning device may send the positioning reference signal. In a case that the first auxiliary positioning device is a receiving end of the positioning reference signal, the first auxiliary positioning device may receive or measure the positioning reference signal.

In some embodiments, the first auxiliary positioning device may send the positioning reference signal by using a transmission resource configured by a network side device. For example, the serving cell or the positioning server determines the first auxiliary positioning device for positioning, and notifies the first auxiliary positioning device of RS information and a sidelink resource for positioning. After the first auxiliary positioning device sends these RS signals, the to-be-tested device estimates a distance and/or an angle for these signals.

In some embodiments, the first auxiliary positioning device may receive or measure the positioning reference signal by using a configured transmission resource. For example, the first auxiliary positioning device may detect an SRS signal sent by the to-be-tested device.

The first auxiliary positioning device may estimate a distance and/or an angle for the positioning reference signal, to determine the first relative location information. In some embodiments, the first auxiliary positioning device may estimate a relative distance of the SRS. For example, the first auxiliary positioning device may determine the relative distance of transmission according to a sending time instant and a receiving time instant of the SRS. For example, the first auxiliary positioning device may determine a relative angle of transmission according to a signal transmission status of the SRS.

In a possible implementation, after the network side device instructs the first auxiliary positioning device to perform positioning, the first auxiliary positioning device may estimate a distance and/or angle for all pilot sequences in a specific resource pool.

The first auxiliary positioning device may determine the first relative location information according to the positioning reference signal, so as to determine first location information of the to-be-tested device by using the first relative location information, that is, perform positioning on the to-be-tested device.

The first relative location information may determine the first location information of the to-be-tested device with reference to other location information. In some embodiments, the other location information may be second relative location information of the first auxiliary positioning device and the network side device, and third relative location information of the to-be-tested device and the network side device. For example, when the network side device may position the to-be-tested device by using the three-side positioning method, the first relative location information may be related information of one side, and the second relative location information and the third relative location information may be related information of the other two sides. In some embodiments, other location information may be location information of multiple auxiliary positioning devices. The multiple auxiliary positioning devices include multiple first auxiliary positioning devices, so as to determine multiple pieces of first relative location information. For example, when the to-be-tested device is positioned based on the multiple auxiliary positioning devices, the first location information of the to-be-tested device may be determined based on the multiple pieces of first relative location information. This case is described in detail below with reference to FIG. 5.

The first location information of the to-be-tested device may indicate an absolute location of the to-be-tested device. In some embodiments, the first location information may be absolute coordinates of the to-be-tested device, and directly indicates an absolute location of the to-be-tested device. In some embodiments, the first location information may be coordinates relative to coordinates of a location of the network side device or coordinate relative to other reference coordinates, and a location of the to-be-tested device may be calculated.

The first location information may be determined according to the first relative location information and one or more pieces of other information. The information may be used to calculate the location of the to-be-tested device by the location calculation unit. In some embodiments, the location calculation unit may determine the first location information of the to-be-tested device based on the first relative location information and other location information. In some embodiments, when positioning the to-be-tested device based on the multiple auxiliary positioning devices, the location calculation unit may determine the first location information of the to-be-tested device based on location information of the multiple auxiliary positioning devices and corresponding first relative location information.

The location calculation unit may be an operation unit in different communications devices or entities participating in positioning, so that the location of the to-be-tested device can be calculated based on different devices. In some embodiments, the location calculation unit may be located in a base station, and the base station may include a serving cell that covers the to-be-tested device. In some embodiments, the location calculation unit may be located in a positioning server, such as an LMF. In some embodiments, the position calculation unit may be located in the to-be-tested device, and the to-be-tested device performs positioning by itself according to multiple types of related information.

In some embodiments, the position calculation unit may be located in an auxiliary positioning device. The auxiliary positioning device that performs position calculation may also be referred to as a second auxiliary positioning device. That is, the second auxiliary positioning device may implement location calculation and resource configuration. Similarly, the second auxiliary positioning device may be the first auxiliary positioning device, or may be another positioning device in multiple auxiliary positioning devices. Positioning by using the auxiliary positioning device can decrease interaction time. When the positioning service only needs to know the relative location information, the auxiliary positioning device may directly perform a location calculation, without sending a location calculation request to the network side device. For a movable auxiliary positioning device, if location calculation is performed on a network side, the network side needs to continuously update a location of the auxiliary positioning device, or the auxiliary positioning device needs to continuously report the location of the auxiliary positioning device and time for measuring the position, so that the network side performs location calculation, resulting in a relatively large positioning delay. For example, when the first auxiliary positioning device performs location calculation, both the first auxiliary positioning device and the to-be-tested device are unnecessary to feed back ranging information, such as the first relative location information, to the LMF.

In some embodiments, the location calculation unit may be located in a third-party device that provides a positioning service. The third-party device may position the to-be-tested device based on multiple types of reference information. The third-party is, for example, positioning software and map software, and the location calculation unit may be located in a positioning device (such as a server) corresponding to these software.

When the location calculation unit is located in a device, multiple types of information from another device need to be collected to position the to-be-tested device. In some embodiments, when the location calculation unit is located in the positioning server and when the first auxiliary positioning device or the to-be-tested device reports the first relative location information to the positioning server, information or measurement time of a sidelink corresponding to the positioning reference signal may be further reported. For example, the first auxiliary positioning device or the to-be-tested device may report an ID number of the sidelink, an ID of the terminal device of the sidelink, or a zone ID of the sidelink.

After performing the location calculation, the location calculation unit may send the first location information of the to-be-tested device to another device according to a requirement. For example, after performing location calculation, the positioning server may notify the to-be-tested device or the base station on the network side of the location information according to a requirement.

The foregoing describes the positioning method based on the first auxiliary positioning device according to the embodiment of the present application with reference to FIG. 3. The following describes another positioning method according to an embodiment of the present application with reference to FIG. 4. The positioning method in FIG. 3 is described from a perspective of a first auxiliary positioning device in FIG. 3, while the method shown in FIG. 4 is described from a perspective of a to-be-tested device. Therefore, for brevity, the terms already present in FIG. 3 are not explained in detail in FIG. 4.

Reference is made to FIG. 4. In step S410, determining a positioning reference signal by the to-be-tested device.

The positioning reference signal may be a reference signal (for example, an SRS) that supports uplink positioning, or may be another reference signal that is sent by the to-be-tested device and that can measure a position relative to the first auxiliary positioning device. A type of the positioning reference signal is not limited herein.

The process of determining, by the to-be-tested device, a positioning reference signal may include: determining, by the to-be-tested device, a resource for transmitting the positioning reference signal. The transmission resource of the positioning reference signal may be a resource in the transmission resource pool configured by the network side device or the auxiliary positioning device, or may be a resource selected or sensed by the to-be-tested device from the resource pool.

In some embodiments, the transmission resource of the positioning reference signal may be selected by the to-be-tested device from the resource pool. The resource pool may be a specific resource pool for positioning, or may be a shared resource pool. For example, after the to-be-tested device selects, from the specific resource pool, a sidelink resource for sending the SRS, the serving cell or the positioning server may instruct the first auxiliary positioning device to receive the SRS.

In some embodiments, the transmission resource of the positioning reference signal is sensed by the to-be-tested device. The to-be-tested device selects an un-sensed sequence from the resource pool for sending. For example, the to-be-tested device may sense, from a specific resource pool, a resource for sending an SRS, to send or measure the SRS.

In step S420, measuring or sending the positioning reference signal by the to-be-tested device by using a sidelink.

In a case that the to-be-tested device is a transmitting end of the positioning reference signal, the to-be-tested device may send the positioning reference signal by using a configured or sensed resource. In a case that the to-be-tested device is a receiving end of the positioning reference signal, the to-be-tested device may receive or measure the positioning reference signal. The to-be-tested device may determine the first relative location information according to the positioning reference signal. The terms described above are not described herein again.

It may be learned from FIG. 3 and FIG. 4 that, in embodiments of the present application, the location of the to-be-tested device can be determined based on the first relative location information. The positioning reference signal for determining the first relative location information is transmitted between the to-be-tested device and the first auxiliary positioning device. The first auxiliary positioning device is located around the to-be-tested device. Therefore, a signal propagation distance is short, a signal attenuation is small, and thus visual range propagation may be performed with a high probability. Therefore, the first relative location information may be determined based on a line of sight signal, thereby improving accuracy of the determined location information. After the first relative location information is provided to the position calculation unit, the first relative location information can effectively assist the position calculation unit in calculating the position coordinates of the to-be-tested device. That is, the relative distance between the first auxiliary positioning device and the to-be-tested device can assist a reference device, the serving cell, or the positioning server (for example, LMF) in measuring the absolute position of the to-be-tested device.

FIG. 5 shows another positioning method according to an embodiment of the present application. FIG. 5 is a schematic flowchart of the method performed by a network side device. Reference is made to FIG. 5. In step S510, receiving first relative location information of the first auxiliary positioning device and the to-be-tested device by the network side device. Related terms are described in detail in FIG. 3 and FIG. 4, and details are not described herein again.

As mentioned above, the first location information of the to-be-tested device may be determined according to the first relative location information and one or more types of other information. The one or more types of other information may include second relative location information of the auxiliary positioning device and the network side device, third relative location information of the to-be-tested device and the network side device, and location information of multiple auxiliary positioning devices.

The second relative location information may represent a relative distance and/or an angle between the first auxiliary positioning device and a base station. In some embodiments, in a case that the network side device refers to the positioning server, the second relative location information may further indicate a relative distance and/or an angle between the first auxiliary positioning device and a positioning server of a core network.

In some embodiments, the second relative location information may be determined according to the location information of the first auxiliary positioning device. When the network side device performs location calculation, the location information of the first auxiliary positioning device may be obtained by the network side device in response to a positioning service request, or the first auxiliary positioning device may send the location information to the network side device.

The third relative location information may indicate a relative distance or an angle between the to-be-tested device and the network side device. In some embodiments, a propagation characteristic from the auxiliary positioning device to the network side device is better than a propagation characteristic from the to-be-tested device to the network side device, and estimation accuracy of the second relative location information is higher than estimation accuracy of the third relative location information. That is, positioning estimation under two high-quality propagation paths corresponding to the first relative location information and the second relative location information may be used to calibrate positioning estimation under a path with relatively poor propagation quality corresponding to the third relative location information. For example, when the first auxiliary positioning device is a roadside unit, a distance from the first auxiliary positioning device to the network side device is relatively short.

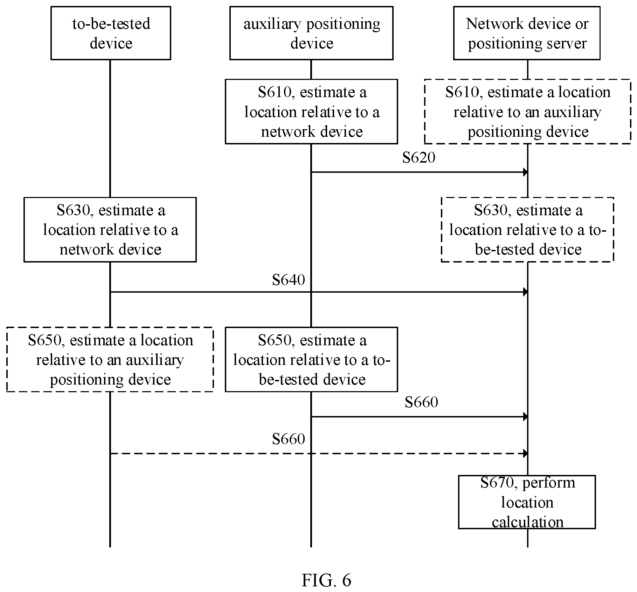

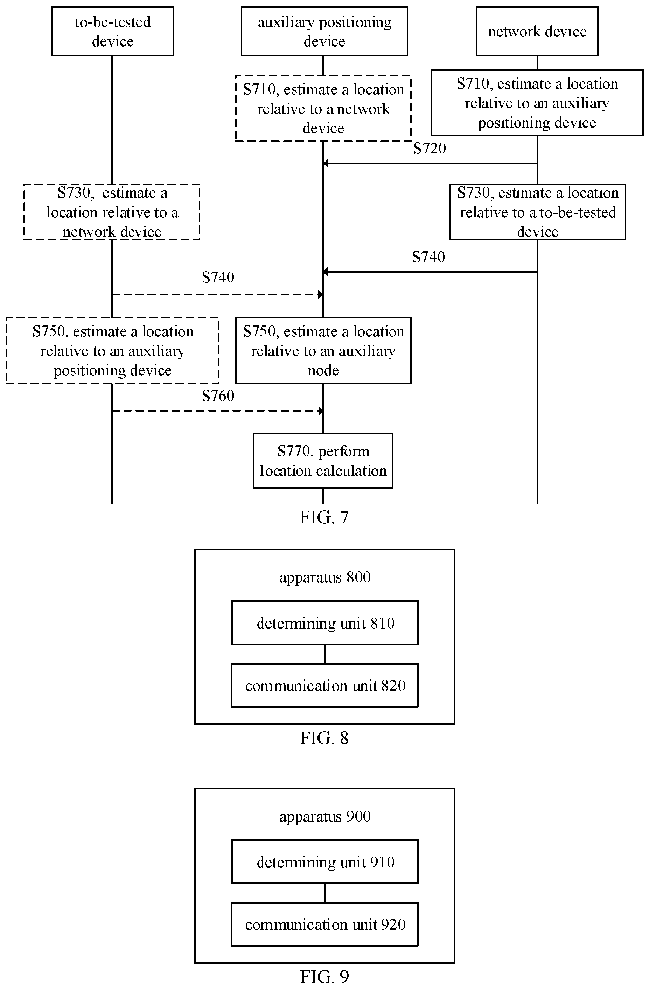

In some embodiments, the first location information may be determined according to the first relative location information, the second relative location information, and the third relative location information. Therefore, the positioning method provided in embodiments of the present application may support single-station positioning. That is, an auxiliary positioning device of a single base station is sufficient to perform auxiliary positioning, without performing uplink or downlink processing by using a neighboring cell base station. For example, relative distances corresponding to the foregoing three pieces of relative location information may respectively serve as three auxiliary sides in the three-side positioning method. In a case that locations of the network side device and the first auxiliary positioning device are determined, the position calculation unit may determine an actual location of the to-be-tested device. This case is described in detail below with reference to FIG. 6 and FIG. 7.

In some embodiments, a distance from the to-be-tested device to the first auxiliary positioning device is relatively short, and there is a line of sight between the to-be-tested device and the first auxiliary positioning device with a high probability. Therefore, a measured distance between the first auxiliary positioning device and the to-be-tested device has relatively high reliability. That is, accuracy of the measured distance between the first auxiliary positioning device and the to-be-tested device is higher than accuracy of a measured distance between the network side device and the to-be-tested device. The accuracy of the measured distance between the network side device and the to-be-tested device is not high, resulting in an offset of a location calculated based on the third relative location information relative to an actual location. Therefore, fine tuning may be performed according to the calculated location, so that the finally estimated distance from the to-be-tested device to the first auxiliary positioning device is closer to an actual value, for example, a first relative distance between the to-be-tested device and the first auxiliary positioning device.

For example, a first relative distance between the to-be-tested device and the first auxiliary positioning device is d, a location of the first auxiliary positioning device is indicated by $(x_1, y_1)$, a location of the to-be-tested device calculated according to the first relative location information, the second relative location information, and the third relative location information is indicated by $(x_2, y_2)$, and the first location information $(x, y)$ meets the following condition:

$$\begin{cases} x = x_1 + d\,\dfrac{x_2 - x_1}{\sqrt{(x_2 - x_1)^2 + (y_2 - y_1)^2}} \\ y = y_1 + d\,\dfrac{y_2 - y_1}{\sqrt{(x_2 - x_1)^2 + (y_2 - y_1)^2}} \end{cases}.$$

In some embodiments, the first location information may be determined according to the first relative location information and location information of multiple auxiliary positioning devices. The multiple auxiliary positioning devices may include a first auxiliary positioning device. For example, multiple auxiliary positioning devices and a to-be-tested device transmit a positioning reference signal to obtain multiple pieces of first relative location information. The location information of the multiple auxiliary positioning devices and the first relative location information is sent to the location calculation unit, and the first location information of the to-be-tested device may be determined by using a three-side positioning method or a triangular positioning method. That is, multiple auxiliary positioning devices in a coverage of one base station may be equivalent to multiple base stations involved in the positioning technology shown in FIG. 2.

The location information of the auxiliary positioning device may be obtained in one or more manners, for example, based on another positioning system or information determined when network deployment is performed. That is, the first auxiliary positioning device may perform positioning in multiple manners.

In a possible implementation, in a case that the communications device may serve as an auxiliary positioning device of the to-be-tested device, positioning may be performed by sending a positioning service request, and the positioning request requires a low delay. Because a delay required by the positioning request is low, positioning accuracy of the auxiliary positioning device can be improved in multiple manners. For example, the positioning server may determine location information of the auxiliary positioning device by using large bandwidth and multiple base stations without considering a delay. For example, the first auxiliary positioning device or the positioning server may jointly process data sampled for multiple times, thereby improving positioning accuracy of the auxiliary positioning device.

In another possible implementation, the auxiliary positioning device may further send positioning related information to the network side device, to reduce an overhead of the network side related positioning device. For example, the positioning server may perform new location estimation according to location information prior to the first auxiliary positioning device. For example, the first auxiliary positioning device may send a static state or a moving speed of the first auxiliary positioning device, or a previously positioned location and a corresponding positioning time to the positioning server. That is, the first auxiliary positioning device may notify the positioning server of the positioned location and positioning time information, and may further notify the positioning server of movement information such as a moving speed and a moving direction of the first auxiliary positioning device.

In another possible implementation, the location information of the auxiliary positioning device may be obtained according to another positioning system. For example, the first auxiliary positioning device may perform positioning by using a global navigation satellite system (global navigation satellite system, GNSS), so as to obtain high-accuracy location information. When the first auxiliary positioning device performs positioning by using the GNSS, the network side device in the wireless network (for example, the 5G system) does not know the information. Therefore, the first auxiliary positioning device needs to notify the network side device of the information. That is, after the location information of the first auxiliary positioning device is determined by using the GNSS, the location information of the first auxiliary positioning device may be sent to the network side device. For example, a parking pile, a charging pile, and a dedicated positioning reference node in the sidelink communications system may implement this function. For another example, the terminal device of the sidelink communications system may notify the serving cell base station or the positioning server by using higher layer signaling, and the device may function as the auxiliary positioning device.

In another possible implementation, the location information of the auxiliary positioning device may be determined according to known related information. For example, in a case that the first auxiliary positioning device is a roadside device in a sidelink communications system, the device has determined location information when performing network deployment.

In another possible implementation, when determining that a specific terminal device is an auxiliary positioning device, the network side device may send a location request to the device. The auxiliary positioning device may notify the network side device of the location information and time information for estimating the location.

In another possible implementation, the auxiliary positioning device may perform positioning in response to a request of the network side device, or a positioning period is specified in a protocol. For example, it may be specified that when auxiliary positioning is to be performed, the first auxiliary positioning device may automatically update location information, and report an updated result.

In some embodiments, when the to-be-tested device is positioned according to the location information of the multiple auxiliary positioning devices, the auxiliary positioning device may perform resource configuration and location calculation. In a possible implementation, one auxiliary positioning device may be selected from the multiple auxiliary positioning devices as a central node, and the central node may serve as a location calculation node or configure a resource for another auxiliary positioning device and a to-be-tested node. The central node may also be the foregoing second auxiliary positioning device.

In a possible implementation, the second auxiliary positioning device may be configured by the network side, or determined according to distances between the multiple auxiliary positioning devices and the to-be-tested device.

In a possible implementation, when the second auxiliary positioning device is determined according to the distances between the multiple auxiliary positioning devices and the to-be-tested device, the multiple distances between the multiple auxiliary positioning devices and the to-be-tested device may be compared with each other. That is, the second auxiliary positioning device may be configured according to a distance between the auxiliary positioning device and the to-be-tested device. For example, the to-be-tested device may select a relatively close auxiliary positioning device as the second auxiliary positioning device according to a measurement result, and notify each auxiliary positioning device of identity (identity, ID) information of the selected device.

As an example, the auxiliary positioning device closest to the to-be-tested device may be selected as the second auxiliary positioning device.

As an example, if a difference of distances between at least two of the multiple auxiliary positioning devices and the to-be-tested device is less than a first threshold, the auxiliary positioning device with a highest weight in the at least two auxiliary positioning devices is determined as the second auxiliary positioning device. That is, in a case that the distances between the multiple auxiliary positioning devices and the to-be-tested device are close to each other, the second auxiliary positioning device may be determined according to the distance and a priority of the auxiliary positioning device. The first threshold may be a preset threshold. The weight may be determined according to the priority of the auxiliary positioning device or a capability of the auxiliary positioning device. The capability of the auxiliary positioning device capability may be a power consumption level. As an example, the network side device may notify the to-be-tested device of the weight.

In some embodiments, the first location information may be determined according to the first relative location information, the second relative location information, and location information of multiple auxiliary positioning devices. For example, when the to-be-tested device and the network side device are arranged in the NLoS scenario, accuracy of the third relative location information is relatively low. The network side device may determine a relative distance between the two auxiliary positioning devices based on the location information of the two auxiliary positioning devices and the second relative location information. The relative distance together with the two pieces of first relative location information may be applied to a three-side positioning method, thereby determining a location of the to-be-tested device.

In some embodiments, the first location information may further include multiple estimated values about the location of the to-be-tested device obtained according to the multiple pieces of relative location information and the location information of the auxiliary positioning device. When the position calculation unit obtains more estimated values, positioning accuracy of the to-be-tested device is higher.

It may be learned from the foregoing that multiple communications devices around the to-be-tested device may serve as auxiliary positioning devices. However, for some communications devices, large fading from the communication device to the to-be-tested device occurs, and a multi-path status is complex. How to select the auxiliary positioning device by the network side device or the to-be-tested device becomes a problem to be solved, and how to instruct the determined auxiliary positioning device to perform auxiliary positioning needs to be considered.

The selection or configuration of the auxiliary positioning device may be performed by the network side device or the to-be-tested device. In some embodiments, when determining that a specific auxiliary positioning device performs auxiliary positioning of the to-be-tested device, the network side device may instruct the auxiliary positioning device. For example, the network side device may send first information to the first auxiliary positioning device. The first information is used to instruct the first auxiliary positioning device to perform auxiliary positioning of the to-be-tested device.

In some embodiments, after the first information is received by the first auxiliary positioning device, the first auxiliary positioning device enables sending of the positioning reference signal. In the NR system, pilot is generally sent in a beam scanning manner, and power consumption is relatively high. To reduce power consumption, multiple auxiliary positioning devices including the first auxiliary positioning device may disable sending of the positioning reference signal. For example, when the auxiliary positioning device is the PRU, the PRU may disable sending of the PRS. When a positioning processing instruction is received, the auxiliary positioning device enables sending of PRS.

In some embodiments, the first information may include first request information. The first request information may include at least one type of information related to positioning of the to-be-tested device. For example, the first request information may include ID information of the to-be-tested device, which assists the auxiliary positioning device in determining a positioning target. For example, the first request information may include a positioning service request initiated by the to-be-tested device, which is used to determine a positioning requirement. For example, the first request information may include information for instructing the auxiliary positioning device to perform positioning measurement, or information for instructing the auxiliary positioning device to send a pilot signal for positioning, and the first request information may directly instruct to perform auxiliary positioning. For example, the first request information may include a quality of service (quality of service, QoS) requirement of a positioning service of the to-be-tested device, which assists the positioning device in determining a related configuration such as positioning accuracy.

In some embodiments, the first information may include first configuration information. The first configuration information may be determined according to a configuration status of the first auxiliary positioning device. The configuration status of the first auxiliary positioning device may be determined by using a sensing (sensing) result of the to-be-tested device. In a possible implementation, the to-be-tested device may sense a pilot signal sent by the auxiliary positioning device, and determine, based on a sensing result, whether the auxiliary positioning device performs auxiliary positioning. That is, the first configuration information may be determined according to the sensing result of the to-be-tested device, and the sensing result of the to-be-tested device is used to determine an auxiliary positioning device performing auxiliary positioning. The sensing is related to a pilot signal sent by the auxiliary positioning device.

In a possible implementation, the sensing result of the to-be-tested device may include at least one type of information related to the pilot signal. For example, the sensing result may include ID information of the auxiliary positioning device, which is used to report, to the network side device, the auxiliary positioning device that participates in positioning. The ID information may be an PRU ID of the auxiliary positioning device, or may be an intra-group ID of the auxiliary positioning device. For example, the sensing result may include sensed frequency information. The frequency information may include a channel bandwidth of each frequency and a band (band) sequence number corresponding to the frequency. For example, the sensing result may include channel quality of the sensed frequency. The channel quality may include a signal-to-noise ratio, RSRP, reference signal receive quality (reference signal receive quality, RSRQ), a received signal strength indicator (received signal strength indicator, RSSI), and the like. For example, the sensing result may further include time when the auxiliary positioning device sends the pilot signal.

In a possible implementation, the to-be-tested device may report the auxiliary positioning device determined by sensing. The network side device may configure, according to the reported auxiliary positioning device, resources for positioning. For example, the auxiliary positioning device sends a positioning reference signal, and the to-be-tested device senses the sent signal. The to-be-tested device may report an available auxiliary positioning device to the network side device according to measured signal quality of the reference signal.

In a possible implementation, the to-be-tested device may perform sensing based on the determined pilot signal, so that the auxiliary positioning device is unnecessary to send a reference signal for positioning all the time, thereby reducing power consumption and improving sensing efficiency. For example, when the to-be-tested device performs sensing, a time-frequency resource for sending the pilot signal by the auxiliary positioning device may be determined.

In a possible implementation, the to-be-tested device may determine, based on a message sent by the network side device or the auxiliary positioning device, the pilot signal for sensing. For example, the base station notifies the covered to-be-tested device of the pilot signal in a broadcast manner. That is, the information corresponding to the pilot signal is carried in a broadcast message. Further, the base station may further send pilot configuration information to the auxiliary positioning device in a current cell sending sensing pilot. The pilot configuration information may indicate a transmission resource of the pilot signal. That is, the transmission resource of the pilot signal is indicated by the pilot configuration information.

In another possible implementation, the to-be-tested device may calculate the related information of the pilot signal according to some parameters. The to-be-tested device may calculate according to an association between a pilot signal and a known parameter. That is, the information corresponding to the pilot signal is determined by using a parameter known to the to-be-tested device. The to-be-tested device may calculate the pilot signal by using the association between these parameters and the pilot signal, to perform corresponding sensing.

Parameters that are known to or may be determined by the to-be-tested device include, such as an SSB index, or a sidelink zone ID (zone ID) corresponding to the auxiliary positioning device. The association between the pilot signal and these parameters may include that: the pilot signal or a scrambling code of the pilot signal is associated with an SSB index, and the pilot signal or the scrambling code of the pilot signal is associated with a sidelink zone identification corresponding to the auxiliary positioning device.

In some embodiments, the to-be-tested device senses pilot signals sent by multiple auxiliary positioning devices. The multiple auxiliary positioning devices may be selected or configured preliminarily by the network side device. That is, the multiple auxiliary positioning devices sensed by the to-be-tested device are devices that are instructed by the network-side device to the to-be-tested device for auxiliary positioning. For example, there are eight communications devices that may perform auxiliary positioning around the to-be-tested device, and the network side device may determine, based on a specific factor, five of the eight devices as auxiliary positioning devices corresponding to the to-be-tested device.

In some embodiments, the auxiliary positioning device corresponding to the to-be-tested device may be determined by the base station. For example, the base station may determine the auxiliary positioning device according to an approximate location (second location information) of the to-be-tested device, and send the first configuration information. That is, the first configuration information may be determined according to the second location information of the to-be-tested device. The second location information may indicate the approximate location of the to-be-tested device, and the second location information of the to-be-tested device may meet a positioning requirement in some cases. Therefore, positioning accuracy of the second location information is lower than positioning accuracy of the first location information of the to-be-tested device.

In a possible implementation, the base station may determine the second location information according to a related parameter of the to-be-tested device. For example, the base station may determine, according to TA corresponding to the to-be-tested device, a serving cell in which the to-be-tested device is located, so as to determine an approximate location of the to-be-tested device. For example, the base station may determine an approximate distance or direction of the to-be-tested device according to the RSRP corresponding to the to-be-tested device. For example, the base station may preliminarily determine the location of the to-be-tested device according to a direction and time information of the SSB index corresponding to the to-be-tested device. For example, the base station may further determine the second location information of the to-be-tested device according to the multiple pieces of information described above.

In a possible implementation, the base station may first perform coarse positioning on the to-be-tested device, to perform selection or configuration of the auxiliary positioning device for high-accuracy positioning. For example, the base station may select, from the multiple available auxiliary positioning devices, the auxiliary positioning device corresponding to the to-be-tested device according to an approximate location of the user. The auxiliary positioning device corresponding to the to-be-tested device may be a device located around the to-be-tested device, or may be a device that may form a line of sight scenario with the to-be-tested device. That is, when the positioning accuracy of the to-be-tested device cannot meet the requirement, the network side device may use the positioning method described in the embodiments of the present application.

In a possible implementation, after determining the auxiliary positioning device according to the second location information of the to-be-tested device, the network side device may perform a next step according to a requirement of the positioning procedure. For example, the network side device may send the first configuration information to the auxiliary positioning device. That is, the network side device may instruct the determined auxiliary positioning device to perform auxiliary positioning, and the auxiliary positioning device may perform positioning detection to determine location information of the auxiliary positioning device. For another example, the base station may instruct the auxiliary positioning device to send the pilot signal for sensing, and send the ID of the auxiliary positioning device to the to-be-tested device for further selection. The to-be-tested device may select an auxiliary positioning device with better channel quality by detecting, thereby improving positioning accuracy.

As mentioned above, in a case that multiple paths from some auxiliary positioning devices to a to-be-tested device are complex, the network side device or the to-be-tested device may easily identify, by using received signal power, positioning estimation under an LoS from the auxiliary positioning device to the to-be-tested device. Because a propagation distance from the auxiliary positioning device to the to-be-tested device is relatively short, a path loss is small, and thus a received signal power of the LoS is significantly greater than received signal power of another propagation path.

With reference to FIG. 3 to FIG. 5, the foregoing describes the positioning method according to the embodiments of the present application. For ease of understanding, the following specifically describes a possible procedure of the method performed between the to-be-tested device, the auxiliary positioning device, and the network side device with reference to FIG. 6 and FIG. 7. Both FIG. 6 and FIG. 7 are described from a perspective of interaction between three devices, and a dashed line indicates that the procedure is optional. In FIG. 6, a possible implementation is described by using an example in which a location calculation unit is included in the network side device.

Reference is made to FIG. 6. In step S610, estimating a location of the auxiliary positioning device relative to the network side device, that is, second relative location information. Step S610 may be performed by the auxiliary positioning device or the network side device. The network side device is a base station or a positioning server.

In step S620, reporting the estimated second relative location information to the network side device by the auxiliary positioning device, so as to facilitate location calculation. In a case that the network side device performs step S610 by using the base station and the positioning calculation unit is arranged in the positioning server, the base station needs to report the second relative location information to the positioning server (not shown Fig. 6), so that the positioning server performs location calculation.

In step S630, estimating information of a distance or an angle between the to-be-tested device and the network side device, that is, estimating third relative location information. Step S630 may be performed by the to-be-tested device or the network side device.

In step S640, reporting the estimated third relative location information to the network side device by the to-be-tested device, so as to facilitate location calculation. In a case that the network side device performs step S630 by using the base station and the calculation unit is arranged in the positioning server, the base station also needs to report the third relative location information to the positioning server (not shown Fig. 6), so that the positioning server performs location resolution.

In step S650, estimating information of the distance or angle between the to-be-tested device and the auxiliary positioning device, that is, estimating the first relative location information. Step S650 may be performed by the to-be-tested device or the auxiliary positioning device.

In step S660, reporting the first relative location information to the network side device, so that the location calculation unit performs location calculation. Step S660 may be performed by the to-be-tested device or the auxiliary positioning device.

In step S670, performing location calculation by the location calculation unit of the network side device.

In FIG. 7, a possible implementation is described by using an example in which the position calculation unit is included in the auxiliary positioning device. FIG. 7 differs from FIG. 6 mainly in a location of the location calculation unit, that is, the location calculation is performed by the auxiliary positioning device in FIG. 7.

Reference is made to FIG. 7. Step S710, step S730, step S750 are the same as corresponding steps in FIG. 6, and details are not described again.

In step S720, sending the estimated second relative location information to the auxiliary positioning device by the network side device. If step S710 is performed by the auxiliary positioning device, step S720 may not be performed.

In step S740, sending the third relative location information estimated by the to-be-tested device or the network side device to the auxiliary positioning device.

In step S760, sending the estimated first relative location information to the auxiliary positioning device by the to-be-tested device. If step S750 is performed by the auxiliary positioning device, step S760 may not be performed.

In step S770, performing location calculation by the location calculation unit of the auxiliary positioning device.

It may be learned from FIG. 6 and FIG. 7 that, according to the positioning method described in the embodiments of the present application, single-station positioning may be performed, that is, it is unnecessary to perform position calculation in LMF as shown in FIG. 2. A three-level architecture needs to be used to perform position resolution by using the LMF, resulting in a relatively long processing delay. Therefore, according to the embodiments of the present application, a positioning processing delay can be reduced.

In embodiments of the present application, when auxiliary positioning of the to-be-tested device is performed by using the auxiliary positioning device, the to-be-tested device may further perform high-accuracy positioning based on a signal with a relatively low sampling rate.

In some embodiments, the auxiliary positioning device and the to-be-tested device may send reference signals to the network side device at an absolute time. The network side device may distinguish according to a phase difference of the two signals, and obtain, by using a distance angle test unit, an absolute time when the auxiliary positioning device and the to-be-tested device send pilots. To ensure measurement accuracy, the absolute time when the auxiliary positioning device and the to-be-tested device send the signal needs to be highly accurate.

In some embodiments, the auxiliary positioning device and the to-be-tested device may receive the reference signal sent by the network side device, and send time when the reference signal is received to the network side device. Similarly, to ensure positioning accuracy, the time reported to the network side device when the reference signal is received needs to be set to be within a small time range.

In conclusion, according to the positioning method provided in the embodiments of the present application, the network side device or the auxiliary positioning device estimates the location of the auxiliary positioning device relative to the network side device, and the auxiliary positioning device or the to-be-tested device feeds back information, such as a relative distance between the to-be-tested device and the auxiliary positioning device or a location/ID of the auxiliary positioning device, to the location calculation unit, thereby improving positioning accuracy of the to-be-tested device.

The foregoing describes the method embodiments of the present application in detail with reference to FIG. 3 to FIG. 7. The following describes in detail apparatus embodiments of the present application with reference to FIG. 8 to FIG. 11. It should be understood that the description of the apparatus embodiment corresponds to the description of the method embodiments. Therefore, for a part that is not described in detail, reference may be made to the foregoing method embodiments.

FIG. 8 is a schematic block diagram of a positioning apparatus according to an embodiment of the present application. The apparatus 800 may be any one of the first auxiliary positioning devices described above. The apparatus 800 shown in FIG. 8 includes a determining unit 810 and a communications unit 820.

The determining unit 810 may be configured to determine a positioning reference signal, where the positioning reference signal is used to determine first relative location information of the first auxiliary positioning device and the to-be-tested device.

The communications unit 820 may be configured to send or measure the positioning reference signal by using a sidelink. The first relative location information is used to determine first location information of the to-be-tested device.

Optionally, the first location information is further determined according to the following information: second relative location information of the first auxiliary positioning device and the network side device, and third relative location information of the to-be-tested device and the network side device; or location information of multiple auxiliary positioning devices, where the multiple auxiliary positioning devices include the first auxiliary positioning device.

Optionally, the multiple auxiliary positioning devices further include a second auxiliary positioning device. The second auxiliary positioning device is configured to calculate a location of the to-be-tested device, and/or configured to configure resources for another auxiliary positioning device in the multiple auxiliary positioning devices and the to-be-tested device.

Optionally, the second auxiliary positioning device is determined according to one or more of the following manners: configuring by the network side device; and configuring according to distances between multiple auxiliary positioning devices and the to-be-tested device. The communications unit 820 is further configured to receive identification ID information of the second auxiliary positioning device.

Optionally, the second auxiliary positioning device is configured according to distances between the multiple auxiliary positioning devices and the to-be-tested device. If a difference of distances between the at least two auxiliary positioning devices in the multiple auxiliary positioning devices and the to-be-tested device is less than a first threshold, an auxiliary positioning device with a highest weight in the at least two auxiliary positioning devices is determined as the second auxiliary positioning device.

Optionally, the weight is determined according to a priority of the auxiliary positioning device, or is determined according to a capability of the auxiliary positioning device.

Optionally, the second relative location information is determined according to location information of the first auxiliary positioning device, and the communications unit 820 may be further configured to send the location information of the first auxiliary positioning device to the network side device.

Optionally, the first location information is determined by using a location calculation unit, and the location calculation unit is located in the auxiliary positioning device or a third-party device that provides a positioning service.

Optionally, the communications unit 820 may be further configured to receive first information, where the first information is used to instruct the first auxiliary positioning device to perform auxiliary positioning of the to-be-tested device.

Optionally, the apparatus 800 further includes an enabling unit: after the first auxiliary positioning device receives the first information, instructing the first auxiliary positioning device to enable sending of the positioning reference signal.

Optionally, the first information includes first request information, and the first request information includes at least one of the following information: ID information of the to-be-tested device; a positioning service request initiated by a to-be-tested device; information for instructing the first auxiliary positioning device to perform positioning measurement or send a pilot signal for positioning; or QoS requirements of a positioning service of the to-be-tested.

Optionally, a transmission resource of the pilot signal is indicated by using pilot configuration information.

Optionally, the information corresponding to the pilot signal is carried in a broadcast message.

Optionally, the information corresponding to the pilot signal is determined by using a parameter known to the to-be-tested device. The information corresponding to the pilot signal and the parameter have one or more of the following association: the pilot signal is related to an SSB index; a scrambling code of the pilot signal is related to the SSB index; the pilot signal is related to a sidelink zone ID corresponding to the first auxiliary positioning device; or the scrambling code of the pilot signal is related to the sidelink zone ID corresponding to the first auxiliary positioning device.

Optionally, the first information includes first configuration information, the first configuration information is determined according to a sensing result of the to-be-tested device, and the sensing result of the to-be-tested device is used to determine whether the first auxiliary positioning device performs auxiliary positioning.

Optionally, the sensing result of the to-be-tested device includes at least one of the following information: ID information of the first auxiliary positioning device; frequency information sensed by the to-be-tested device; channel quality of a frequency sensed by the to-be-tested device; or time when the first auxiliary positioning device sends the pilot signal.

Optionally, the first auxiliary positioning device is one of the multiple auxiliary positioning devices sensed by the to-be-tested device, and the multiple auxiliary positioning devices are devices that are instructed by the network side device to the to-be-tested device for auxiliary positioning.

Optionally, the first information includes first configuration information, and the first configuration information is determined according to second location information of the to-be-tested device.

Optionally, the second location information is determined based on one or more of the following information: timing advance corresponding to the to-be-tested device; reference signal receive power corresponding to the to-be-tested device; or an SSB index corresponding to the to-be-tested device.

Optionally, a transmission resource pool of the positioning reference signal is configured by the network side device, and a configuration manner includes at least one of the following: the network side device configures the transmission resource according to the ID of the first auxiliary positioning device reported by the to-be-tested device; or the network side device configures the transmission resource according to the second location information of the to-be-tested device.

Optionally, the transmission resource pool of the positioning reference signal is configured by the auxiliary positioning device, and a manner of determining the transmission resource pool includes at least one of the following: the transmission resource pool is determined according to an ID of a zone where the first auxiliary positioning device is located; the transmission resource pool is determined according to an SSB index of the first auxiliary positioning device; the transmission resource pool is determined according to timing advance of the first auxiliary positioning device; or the transmission resource pool is determined according to the ID of the first auxiliary positioning device.

Optionally, the transmission resource of the positioning reference signal is sensed by the to-be-tested device.

For example, a distance of the to-be-tested device relative to the first auxiliary positioning device is d, a location of the first auxiliary positioning device is indicated by $(x_1, y_1)$, a location of the to-be-tested device calculated according to the first relative location information, the second relative location information, and the third relative location information is indicated by $(x_2, y_2)$, and the first location information $(x, y)$ meets the following condition:

$$\begin{cases} x = x_1 + d\,\frac{x_2-x_1}{\sqrt{(x_2-x_1)^2+(y_2-y_1)^2}} \\ y = y_1 + d\,\frac{y_2-y_1}{\sqrt{(x_2-x_1)^2+(y_2-y_1)^2}} \end{cases}.$$

Fig. 9 is a schematic block diagram of another positioning apparatus according to an embodiment of the present application. The apparatus 900 may be any one of the foregoing to-be-tested devices. The apparatus 900 shown in FIG. 9 includes a determining unit 910 and a communications unit 920.

The determining unit 910 may be configured to determine a positioning reference signal, where the positioning reference signal is used to determine first relative location information of the auxiliary positioning device and the to-be-tested device.

The communications unit 920 may be configured to measure or send a positioning reference signal by using a sidelink. The first relative location information is used to determine first location information of the to-be-tested device.

Optionally, the first location information is further determined according to the following information: second relative location information of the first auxiliary positioning device and the network side device; third relative location information of the to-be-tested device and the network side device; or location information of multiple auxiliary positioning devices, where the multiple auxiliary positioning devices include the first auxiliary positioning device.

Optionally, the multiple auxiliary positioning devices further include a second auxiliary positioning device. The second auxiliary positioning device is configured to calculate a location of the to-be-tested device, and/or configured to configure resources for another auxiliary positioning device in the multiple auxiliary positioning devices and the to-be-tested device.

Optionally, the second auxiliary positioning device is determined according to one or more of the following manners: configuring by the network side device; or configuring according to distances between multiple auxiliary positioning devices and the to-be-tested device. The communications unit 920 is further configured to send identification ID information of the second auxiliary positioning device to the multiple auxiliary positioning devices.

Optionally, the second auxiliary positioning device is configured according to distances between the multiple auxiliary positioning devices and the to-be-tested device. If a difference of distances between the at least two auxiliary positioning devices in the multiple auxiliary positioning devices and the to-be-tested device is less than a first threshold, an auxiliary positioning device with a highest weight in the at least two auxiliary positioning devices is determined as the second auxiliary positioning device.

Optionally, the weight is determined according to a priority of the auxiliary positioning device, or is determined according to a capability of the auxiliary positioning device.

Optionally, the first location information is determined by using a location calculation unit, and the location calculation unit is located in the first auxiliary positioning device or a third-party device that provides a positioning service.

Optionally, the apparatus 900 further includes a sensing unit, configured to sense a pilot signal for user positioning sent by the first auxiliary positioning device. The determining unit 910 is further configured to determine, based on a sensing result, whether the first auxiliary positioning device performs auxiliary positioning.

Optionally, a transmission resource of the pilot signal is indicated by using pilot configuration information.

Optionally, the information corresponding to the pilot signal is carried in a broadcast message.

Optionally, the information corresponding to the pilot signal is determined by using a parameter known to the to-be-tested device. The information corresponding to the pilot signal and the parameter have one or more of the following association: the pilot signal is related to an SSB index; a scrambling code of the pilot signal is related to the SSB index; the pilot signal is related to a sidelink zone identification corresponding to the first auxiliary positioning device; or the scrambling code of the pilot signal is related to the sidelink zone identification corresponding to the first auxiliary positioning device.

Optionally, the first auxiliary positioning device is one of the multiple auxiliary positioning devices sensed by the to-be-tested device, and the multiple auxiliary positioning devices are devices that are instructed by the network side device to the to-be-tested device for auxiliary positioning.

Optionally, a transmission resource pool of the positioning reference signal is configured by the network side device, and a configuration manner includes at least one of the following: the network side device configures the transmission resource according to the ID of the first auxiliary positioning device reported by the to-be-tested device; or the network side device configures the transmission resource according to the second location information of the to-be-tested device.

Optionally, the transmission resource pool of the positioning reference signal is configured by the auxiliary positioning device, and a manner of determining the transmission resource pool includes at least one of the following: the transmission resource pool is determined according to an ID of a zone where the first auxiliary positioning device is located; the transmission resource pool is determined according to an SSB index of the first auxiliary positioning device; the transmission resource pool is determined according to timing advance of the first auxiliary positioning device; or the transmission resource pool is determined according to the ID of the first auxiliary positioning device.

Optionally, the transmission resource of the positioning reference signal is sensed by the to-be-tested device.

Optionally, a distance of the to-be-tested device relative to the first auxiliary positioning device is d, a location of the first auxiliary positioning device is indicated by $(x_1, y_1)$, a location of the to-be-tested device calculated according to the first relative location information, the second relative location information, and the third relative location information is indicated by $(x_2, y_2)$, and the first location information $(x, y)$ meets the following condition:

$$\begin{cases} x = x_1 + d\,\dfrac{x_2 - x_1}{\sqrt{(x_2-x_1)^2+(y_2-y_1)^2}} \\ y = y_1 + d\,\dfrac{y_2 - y_1}{\sqrt{(x_2-x_1)^2+(y_2-y_1)^2}} \end{cases}.$$

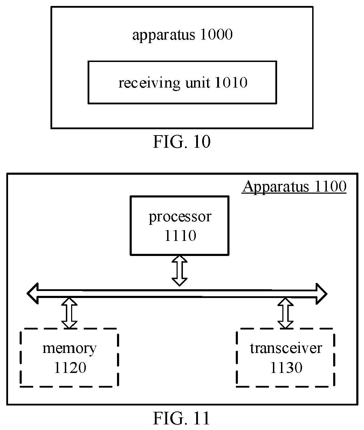

FIG. 10 is a schematic block diagram of still another positioning apparatus according to an embodiment of the present application. The apparatus 1000 may be any network side device described above, such as a serving cell or a positioning server. The apparatus 1000 shown in FIG. 10 includes a determining unit 1010.

The receiving unit 1010 may be configured to receive first relative location information of the first auxiliary positioning device and the to-be-tested device, where the first relative location information is used to determine first location information of the to-be-tested device. The first relative location information is determined based on a positioning reference signal, and the positioning reference signal is transmitted by using a sidelink.

Optionally, the first location information is further determined according to the following information: second relative location information of the first auxiliary positioning device and the network side device, and third relative location information of the to-be-tested device and the network side device; or location information of the multiple auxiliary positioning devices, where the multiple auxiliary positioning devices include the first auxiliary positioning device.

Optionally, the second relative location information is determined according to the location information of the first auxiliary positioning device, and the receiving unit 1010 is further configured to receive the location information of the first auxiliary positioning device.

Optionally, the first location information is determined by using a location calculation unit, and the location calculation unit is located in an auxiliary positioning device or a third-party device that provides a positioning service.

Optionally, the multiple auxiliary positioning devices further include a second auxiliary positioning device. The second auxiliary positioning device is configured to calculate a location of the to-be-tested device, and/or configured to configure resources for another auxiliary positioning device in the multiple auxiliary positioning devices and the to-be-tested device.

Optionally, the second auxiliary positioning device is determined according to one or more of the following manners: configuring by a network side device; or configuring according to distances between multiple auxiliary positioning devices and the to-be-tested device.

Optionally, the second auxiliary positioning device is configured according to distances between the multiple auxiliary positioning devices and the to-be-tested device. If a difference of distances between the at least two auxiliary positioning devices in the multiple auxiliary positioning devices and the to-be-tested device is less than a first threshold, an auxiliary positioning device with a highest weight in the at least two auxiliary positioning devices is determined as the second auxiliary positioning device.

Optionally, the weight is determined according to a priority of the auxiliary positioning device, or is determined according to a capability of the auxiliary positioning device.

Optionally, the apparatus 1000 further includes a sending unit, sending first information, where the first information is used to instruct the first auxiliary positioning device to perform auxiliary positioning of the to-be-tested device.

Optionally, the first information includes first request information, and the first request information includes at least one of the following information: ID information of the to-be-tested device; a positioning service request initiated by a to-be-tested device; information for instructing the auxiliary positioning device to perform positioning measurement or send a pilot signal for positioning; or QoS requirements of a positioning service of the to-be-tested device.

Optionally, a transmission resource of the pilot signal is indicated by using pilot configuration information.

Optionally, information corresponding to the pilot signal is carried in a broadcast message.

Optionally, the information corresponding to the pilot signal is determined by using a parameter known to the to-be-tested device. The information corresponding to the pilot signal and the parameter have one or more of the following association: the pilot signal is related to an SSB index; a scrambling code of the pilot signal is related to an SSB index; the pilot signal is related to a sidelink zone ID corresponding to the first auxiliary positioning device; or the scrambling code of the pilot signal is related to the sidelink zone ID corresponding to the first auxiliary positioning device.

Optionally, the first information includes first configuration information, the first configuration information is determined according to a sensing result of the to-be-tested device, and the sensing result of the to-be-tested device is used to determine whether the first auxiliary positioning device performs auxiliary positioning.

Optionally, the sensing result of the to-be-tested device includes at least one of the following information: ID information of the first auxiliary positioning device; frequency information sensed by the to-be-tested device; channel quality of a frequency sensed by the to-be-tested device; or time when the first auxiliary positioning device sends the pilot signal.

Optionally, the auxiliary positioning device is one of the multiple auxiliary positioning devices sensed by the to-be-tested device, and the multiple auxiliary positioning devices are devices that are instructed by the network side device to the to-be-tested device for auxiliary positioning.

Optionally, the first information includes first configuration information, and the first configuration information is determined according to second location information of the to-be-tested device.

Optionally, the second location information is determined based on one or more of the following information: timing advance corresponding to the to-be-tested device; reference signal receive power corresponding to the to-be-tested device; or the SSB index corresponding to the device to be tested.

Optionally, a transmission resource of the positioning reference signal is configured by the network side device, and a configuration manner includes at least one of the following: the network side device configures the transmission resource according to the ID of the first auxiliary positioning device reported by the to-be-tested device; or the network side device configures the transmission resource according to the second location information of the to-be-tested device.

Optionally, a transmission resource pool of the positioning reference signal is configured by the auxiliary positioning device, and a manner of determining the transmission resource pool includes at least one of the following: the transmission resource pool is determined according to an ID of a zone where the first auxiliary positioning device is located; the transmission resource pool is determined according to an SSB index of the first auxiliary positioning device; the transmission resource pool is determined according to timing advance of the first auxiliary positioning device; or the transmission resource pool is determined according to the ID of the first auxiliary positioning device.

Optionally, the transmission resource of the positioning reference signal is sensed by the to-be-tested device.

Optionally, a distance of the to-be-tested device relative to the first auxiliary positioning device is d, a location of the first auxiliary positioning device is indicated by $(x_1, y_1)$, a location of the to-be-tested device calculated according to the first relative location information, the second relative location information, and the third relative location information is indicated by $(x_2, y_2)$, and the first location information (x, y) meets the following condition:

$$\begin{cases} x = x_1 + d\frac{x_2 - x_1}{\sqrt{(x_2-x_1)^2+(y_2-y_1)^2}} \\ y = y_1 + d\frac{y_2 - y_1}{\sqrt{(x_2-x_1)^2+(y_2-y_1)^2}} \end{cases}.$$

FIG. 11 is a schematic structural diagram of a communications apparatus according to an embodiment of the present application. A dashed line in FIG. 11 indicates that the unit or module is optional. The apparatus 1100 may be configured to implement the method described in the foregoing method embodiments. The apparatus 1100 may be a chip or the foregoing-mentioned to-be-tested device, auxiliary positioning device, or network side device.

The apparatus 1100 may include one or more processors 1110. The processor 1110 may support the apparatus 1100 to implement the method described in the foregoing method embodiments. The processor 1110 may be a general-purpose processor or a dedicated processor. For example, the processor may be a central processing unit (central processing unit, CPU). Alternatively, the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or any conventional processor or the like.

The apparatus 1100 may further include one or more memories 1120. The memory 1120 stores a program, and the program may be executed by the processor 1110, so that the processor 1110 executes the method described in the foregoing method embodiments. The memory 1120 may be independent of the processor 1110 or integrated into the processor 1110.

The apparatus 1100 may further include a transceiver 1130. The processor 1110 may communicate with another device or chip by using the transceiver 1130. For example, the processor 1110 may send data to or receive data from another device or chip by using the transceiver 1130.

An embodiment of the present application further provides a computer-readable storage medium for storing a program. The computer readable storage medium may be applied to the auxiliary positioning device, the to-be-tested device, or the network side device provided in the embodiments of the present application, and the program causes the computer to execute the methods executed by the auxiliary positioning device, the to-be-tested device, or the network side device in the embodiments of the present application.

It should be understood that the computer readable storage medium mentioned in the embodiments of the present application may be any available medium that can be read by a computer, or a data storage device such as a server or a data center that integrates one or more available media. The available medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

An embodiment of the present application further provides a computer program product. The computer program product includes a program. The computer program product may be applied to the auxiliary positioning device, the to-be-tested device, or the network side device provided in the embodiments of the present application, and the program causes the computer to execute the methods executed by the auxiliary positioning device, the to-be-tested device, or the network side device in the embodiments of the present application.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to the embodiments of the present application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center via a wired (such as a coaxial cable, an optical fiber, and a digital subscriber line (digital subscriber line, DSL)) manner or a wireless (such as infrared, wireless, and microwave) manner.

An embodiment of the present application further provides a computer program. The computer program may be applied to the auxiliary positioning device, the to-be-tested device, or the network side device provided in the embodiments of the present application, and the computer program causes the computer to execute the methods executed by the auxiliary positioning device, the to-be-tested device, or the network side device in the embodiments of the present application.

The terms "system" and "network" in the present application may be used interchangeably. In addition, the terms used in the present application are only used to explain the specific embodiments of the present application, and are not intended to limit the present application. The terms "first", "second", "third", "fourth", and the like in the specification, claims, and drawings of the present application are used to distinguish different objects, rather than to describe a specific order. In addition, the terms "include" and "have" and any variations thereof are intended to cover a non-exclusive inclusion.

In the embodiments of the present application, "indicate" mentioned herein may refer to a direct indication, or may refer to an indirect indication, or may mean that there is an association. For example, A indicates B, which may mean that A directly indicates B, for example, B may be obtained by means of A; or may mean that A indirectly indicates B, for example, A indicates C, and B may be obtained by means of C; or may mean that there is an association between A and B.

In the embodiments of the present application, the term "corresponding" may mean that there is a direct or indirect correspondence between the two, or may mean that there is an association between the two, which may also be a relationship such as indicating and being indicated, or configuring and being configured.

In this embodiment of this application, "pre-configuration" may be implemented in a manner in which a corresponding code, table, or other related information may be pre-stored in a device, which is not limited in the present application.

In the embodiments of the present application, the "protocol" may refer to a standard protocol in the communications field, and may include, for example, an LTE protocol, an NR protocol, and a related protocol applied to a future communications system, which is not limited in the present application.

In the embodiments of the present application, determining B based on A does not mean determining B based only on A, but instead B may be determined based on A and/or other information.

In the embodiments of the present application, the term "and/or" is merely an association that describes associated objects, and represents that there may be three relationships. For example, A and/or B may represent three cases: only A exists, both A and B exist, and only B exists. In addition, the character "/" in the specification generally indicates an "or" relationship between the associated objects.

In the embodiments of the present application, sequence numbers of the foregoing processes do not mean execution sequences. The execution sequences of the processes should be determined according to functions and internal logic of the processes, and should not be construed as any limitation on the implementation processes of the embodiments of the present application.

In the multiple embodiments provided in the present application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual requirements to achieve the objectives of the solutions of the embodiments.

In addition, functional units in the embodiments of the present application may be integrated into one processing unit, or each of the units may exist alone physically, or two or more units may be integrated into one unit.

The foregoing descriptions are merely specific implementations of the present application, but the protection scope of the present application is not limited thereto. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A positioning method, comprising:

    determining, by a first auxiliary positioning device, a positioning reference signal, wherein the positioning reference signal is used to determine first relative location information of the first auxiliary positioning device and a to-be-tested device; and
sending or measuring, by the first auxiliary positioning device, the positioning reference signal by using a sidelink,
wherein the first relative location information is used to determine first location information of the to-be-tested device.

2. The method according to claim 1, wherein the first location information is further determined according to the following information:

    second relative location information of the first auxiliary positioning device and a network side device, and third relative location information of the to-be-tested device and the network side device; or
    location information of a plurality of auxiliary positioning devices, wherein the plurality of auxiliary positioning devices comprises the first auxiliary positioning device.

3. The method according to claim 2, wherein the plurality of auxiliary positioning devices further comprises a second auxiliary positioning device, and the second auxiliary positioning device is configured to calculate a location of the to-be-tested device, and/or configured to configure resources for another auxiliary positioning device in the plurality of auxiliary positioning devices and the to-be-tested device.

4. The method according to claim 3, wherein the second auxiliary positioning device is determined according to one or more of the following manners:

    configuring by the network side device; and
    configuring according to distances between the plurality of auxiliary positioning devices and the to-be-tested device;
    wherein the method further comprises:
    receiving, by the first auxiliary positioning device, identification ID information of the second auxiliary positioning device.

5. The method according to claim 4, wherein the second auxiliary positioning device is configured according to distances between the plurality of auxiliary positioning devices and the to-be-tested device; if a difference of distances between at least two auxiliary positioning devices in the plurality of auxiliary positioning devices and the to-be-tested device is less than a first threshold, an auxiliary positioning device with a highest weight in the at least two auxiliary positioning devices is determined as the second auxiliary positioning device.

6. The method according to claim 5, wherein the weight is determined according to a priority of the auxiliary positioning device, or is determined according to a capability of the auxiliary positioning device.

7. The method according to claim 1, wherein before the sending or measuring, by the first auxiliary positioning device, the positioning reference signal by using a sidelink, the method further comprises:
receiving, by the first auxiliary positioning device, first information, wherein the first information is used to instruct the first auxiliary positioning device to perform auxiliary positioning of the to-be-tested device.

8. The method according to claim 7, wherein the receiving, by the first auxiliary positioning device, first information comprises:
enabling, by the first auxiliary positioning device, sending of the positioning reference signal after the first information is received by the first auxiliary positioning device.

9. The method according to claim 7, wherein the first information comprises first request information, and the first request information comprises at least one of the following information:

ID information of the to-be-tested device;
a positioning service request initiated by the to-be-tested device;
information for instructing the first auxiliary positioning device to perform positioning measurement or send a pilot signal for positioning; or
a quality of service requirement of a positioning service of the to-be-tested device.

10. The method according to claim 9, wherein a transmission resource of the pilot signal is indicated by using pilot configuration information.

11. The method according to claim 9, wherein information corresponding to the pilot signal is carried in a broadcast message.

12. The method according to claim 9, wherein the information corresponding to the pilot signal is determined by using a parameter known to the to-be-tested device, and information corresponding to the pilot signal and the parameter have one or more of the following association:

the pilot signal is related to a synchronization signal/physical broadcast channel SSB index;
a scrambling code of the pilot signal is related to an SSB index;
the pilot signal is related to a sidelink zone ID corresponding to the first auxiliary positioning device; or
a scrambling code of the pilot signal is related to a sidelink zone ID corresponding to the first auxiliary positioning device.

13. The method according to claim 7, wherein the first information comprises first configuration information, the first configuration information is determined according to a sensing result of the to-be-tested device, and the sensing result of the to-be-tested device is used to determine whether the first auxiliary positioning device performs auxiliary positioning.

14. The method according to claim 13, wherein the sensing result of the to-be-tested device comprises at least one of the following information:

ID information of the first auxiliary positioning device;
frequency information sensed by the to-be-tested device;
channel quality of a frequency sensed by the to-be-tested device; or
time when the first auxiliary positioning device sends the pilot signal.

15. The method according to claim 13, wherein the first auxiliary positioning device is one auxiliary positioning device of the plurality of auxiliary positioning devices sensed by the to-be-tested device, and the plurality of auxiliary positioning devices sensed by the to-be-tested device are devices that are indicated by the network side device to the to-be-tested device for performing auxiliary positioning.

16. The method according to claim 7, wherein the first information comprises first configuration information, and the first configuration information is determined according to second location information of the to-be-tested device.

17. The method according to claim 16, wherein the second location information is determined based on one or more of the following information:

timing advance corresponding to the to-be-tested device;
reference signal receive power corresponding to the to-be-tested device; or
an SSB index corresponding to the to-be-tested device.

18. The method according to claim 1, wherein the first location information is determined by using a location calculation unit, and the location calculation unit is located in an auxiliary positioning device or a third-party device that provides a positioning service.

19. The method according to claim 1, wherein a transmission resource pool of the positioning reference signal is configured by a network side device, and a configuration manner of the network side device comprises at least one of the following:

configuring, by the network side device, a transmission resource according to an ID of the first auxiliary positioning device that is reported by the to-be-tested device; or
configuring, by the network side device, a transmission resource according to second location information of the to-be-tested device.

20. The method according to claim 1, wherein a transmission resource pool of the positioning reference signal is configured by an auxiliary positioning device, and a manner of determining the transmission resource pool comprises at least one of the following:

the transmission resource pool is determined according to an ID of a zone where the first auxiliary positioning device is located;
the transmission resource pool is determined according to an SSB index of the first auxiliary positioning device;
the transmission resource pool is determined according to timing advance of the first auxiliary positioning device; or
the transmission resource pool is determined according to an ID of the first auxiliary positioning device.

21. The method according to claim 2, wherein the second relative location information is determined according to location information of the first auxiliary positioning device, and the method further comprises:
sending location information of the first auxiliary positioning device to the network side device.

22. The method according to claim 2, wherein a distance between the to-be-tested device and the first auxiliary positioning device is d, a location of the first auxiliary positioning device is indicated by $(x_1, y_1)$, a location of the to-be-tested device calculated according to the first relative location information, the second relative location information and the third relative location information is indicated by $(x_2, y_2)$, and the first location information $(x, y)$ meets the following condition:

$$\begin{cases} x = x_1 + d \frac{x_2 - x_1}{\sqrt{(x_2-x_1)^2+(y_2-y_1)^2}} \\ y = y_1 + d \frac{y_2 - y_1}{\sqrt{(x_2-x_1)^2+(y_2-y_1)^2}} \end{cases}.$$

23. A positioning method, comprising:

determining, by a to-be-tested device, a positioning reference signal, wherein the positioning reference signal is used to determine first relative location information of a first auxiliary positioning device and the to-be-tested device; and
measuring or sending, by the to-be-tested device, the positioning reference signal by using a sidelink,
wherein the first relative location information is used to determine first location information of the to-be-tested device.

24. The method according to claim 23, wherein the first location information is further determined according to the following information:

second relative location information of the first auxiliary positioning device and a network side device, and third relative location information of the to-be-tested device and the network side device; or
location information of a plurality of auxiliary positioning devices, wherein the plurality of auxiliary positioning devices comprises the first auxiliary positioning device.

25. The method according to claim 24, wherein the plurality of auxiliary positioning devices further comprises a second auxiliary positioning device, and the second auxiliary positioning device is configured to calculate a location of the to-be-tested device, and/or configured to configure resources for another auxiliary positioning device in the plurality of auxiliary positioning devices and the to-be-tested device.

26. The method according to claim 25, wherein the second auxiliary positioning device is determined according to one or more of the following manners:

configuring by the network side device; or
configuring according to distances between the plurality of auxiliary positioning devices and the to-be-tested device,
wherein the method further comprises:
sending, by the to-be-tested device, identification ID information of the second auxiliary positioning device to the plurality of auxiliary positioning devices.

27. The method according to claim 26, wherein the second auxiliary positioning device is configured according to distances between the plurality of auxiliary positioning devices and the to-be-tested device; if a difference of distances between at least two auxiliary positioning devices in the plurality of auxiliary positioning devices and the to-be-tested device is less than a first threshold, an auxiliary positioning device with a highest weight in the at least two auxiliary positioning devices is determined as the second auxiliary positioning device.

28. The method according to claim 27, wherein the weight is determined according to a priority of the auxiliary positioning device, or is determined according to a capability of the auxiliary positioning device.

29. The method according to claim 23, wherein before the determining, by a to-be-tested device, a positioning reference signal, the method further comprises:

sensing, by the to-be-tested device, a pilot signal for positioning sent by the first auxiliary positioning device; and
determining, based on a sensing result, whether the first auxiliary positioning device performs auxiliary positioning.

30. The method according to claim 29, wherein a transmission resource of the pilot signal is indicated by using pilot configuration information.

31. The method according to claim 29, wherein information corresponding to the pilot signal is carried in a broadcast message.

32. The method according to claim 29, wherein information corresponding to the pilot signal is determined by using a parameter known to the to-be-tested device, and the information corresponding to the pilot signal and the parameter have one or more of the following association:

the pilot signal is related to a synchronization signal/physical broadcast channel SSB index;
a scrambling code of the pilot signal is related to an SSB index;
the pilot signal is related to a sidelink zone identifier ID corresponding to the first auxiliary positioning device; or
a scrambling code of the pilot signal is related to a sidelink zone ID corresponding to the first auxiliary positioning device.

33. The method according to claim 29, wherein the first auxiliary positioning device is one auxiliary positioning device of the plurality of auxiliary positioning devices sensed by the to-be-tested device, and the plurality of auxiliary positioning devices sensed by the to-be-tested device are devices that are indicated by a network side device to the to-be-tested device for performing auxiliary positioning.

34. The method according to claim 23, wherein the first location information is determined by using a location calculation unit, and the location calculation unit is located in an auxiliary positioning device or a third-party device that provides a positioning service.

35. The method according to claim 23, wherein a transmission resource pool of the positioning reference signal is configured by a network side device, and a configuration manner of the network side device comprises at least one of the following:

configuring, by the network side device, a transmission resource according to an ID of the first auxiliary positioning device that is reported by the to-be-tested device; or
configuring, by the network side device, a transmission resource according to second location information of the to-be-tested device.

36. The method according to claim 23, wherein a transmission resource pool of the positioning reference signal is configured by an auxiliary positioning device, and a manner of determining the transmission resource pool comprises at least one of the following:

the transmission resource pool is determined according to an ID of a zone where the first auxiliary positioning device is located;
the transmission resource pool is determined according to an SSB index of the first auxiliary positioning device;
the transmission resource pool is determined according to timing advance of the first auxiliary positioning device; or
the transmission resource pool is determined according to an ID of the first auxiliary positioning device.

37. The method according to claim 24, wherein a distance between the to-be-tested device and the first auxiliary positioning device is d, a location of the first auxiliary positioning device is indicated by $(x_1, y_1)$, a location of the to-be-tested device calculated according to the first relative location information, the second relative location information and the third relative location information is indicated by $(x_2, y_2)$, and the first location information (x, y) meets the following condition:

$$\begin{cases} x = x_1 + d \dfrac{x_2 - x_1}{\sqrt{(x_2 - x_1)^2 + (y_2 - y_1)^2}} \\ y = y_1 + d \dfrac{y_2 - y_1}{\sqrt{(x_2 - x_1)^2 + (y_2 - y_1)^2}} \end{cases}.$$

38. A positioning method, comprising:

receiving, by a network side device, first relative location information of a first auxiliary positioning device and a to-be-tested device, wherein the first relative location information is used to determine first location information of the to-be-tested device,
wherein the first relative location information is determined based on a positioning reference signal, and the positioning reference signal is transmitted by using a sidelink.

39. The method according to claim 38, wherein the first location information is further determined according to the following information:

    second relative location information of the first auxiliary positioning device and the network side device and third relative location information of the to-be-tested device and the network side device; or
    location information of a plurality of auxiliary positioning devices, wherein the plurality of auxiliary positioning devices comprises the first auxiliary positioning device.

40. The method according to claim 39, wherein the plurality of auxiliary positioning devices further comprises a second auxiliary positioning device, and the second auxiliary positioning device is configured to calculate a location of the to-be-tested device, and/or configured to configure resources for another auxiliary positioning device in the plurality of auxiliary positioning devices and the to-be-tested device.

41. The method according to claim 40, wherein the second auxiliary positioning device is determined according to one or more of the following manners:

    configuring by the network side device; or
    configuring according to distances between the plurality of auxiliary positioning devices and the to-be-tested device.

42. The method according to claim 41, wherein the second auxiliary positioning device is configured according to distances between the plurality of auxiliary positioning devices and the to-be-tested device; if a difference of distances between at least two auxiliary positioning devices in the plurality of auxiliary positioning devices and the to-be-tested device is less than a first threshold, an auxiliary positioning device with a highest weight in the at least two auxiliary positioning devices is determined as the second auxiliary positioning device.

43. The method according to claim 42, wherein the weight is determined according to a priority of the auxiliary positioning device, or is determined according to a capability of the auxiliary positioning device.

44. The method according to claim 38, wherein before the receiving, by a network side device, first relative location information of a first auxiliary positioning device and a to-be-tested device, the method comprises:

sending, by the network side device, first information, wherein the first information is used to instruct the first auxiliary positioning device to perform auxiliary positioning of the to-be-tested device.

45. The method according to claim 44, wherein the first information comprises first request information, and the first request information comprises at least one of the following information:

    **ID** information of the to-be-tested device;
    a positioning service request initiated by the to-be-tested device;
    information for instructing the first auxiliary positioning device to perform positioning measurement or send a pilot signal for positioning; or
    a quality of service requirement of a positioning service of the to-be-tested device.

46. The method according to claim 45, wherein a transmission resource of the pilot signal is indicated by using pilot configuration information.

47. The method according to claim 45, wherein information corresponding to the pilot signal is carried in a broadcast message.

48. The method according to claim 45, wherein information corresponding to the pilot signal is determined by using a parameter known to the to-be-tested device, and the information corresponding to the pilot signal and the parameter have one or more of the following association:

    the pilot signal is related to a synchronization signal/physical broadcast channel SSB index;
    a scrambling code of the pilot signal is related to an SSB index;
    the pilot signal is related to a sidelink zone ID corresponding to the first auxiliary positioning device; or
    a scrambling code of the pilot signal is related to a sidelink zone ID corresponding to the first auxiliary positioning device.

49. The method according to claim 44, wherein the first information comprises first configuration information, the first configuration information is determined according to a sensing result of the to-be-tested device, and the sensing result of the to-be-tested device is used to determine whether the first auxiliary positioning device performs auxiliary positioning.

50. The method according to claim 49, wherein the sensing result of the to-be-tested device comprises at least one of the following information:

    ID information of the first auxiliary positioning device;
frequency information sensed by the to-be-tested device;
channel quality of a frequency sensed by the to-be-tested device; or
time when the first auxiliary positioning device sends a pilot signal.

51. The method according to claim 49, wherein the first auxiliary positioning device is one of a plurality of auxiliary positioning devices sensed by the to-be-tested device, and the plurality of auxiliary positioning devices are devices that are indicated by the network side device to the to-be-tested device for performing auxiliary positioning.

52. The method according to claim 44, wherein the first information comprises first configuration information, and the first configuration information is determined according to second location information of the to-be-tested device.

53. The method according to claim 52, wherein the second location information is determined based on one or more of the following information:

timing advance corresponding to the to-be-tested device;
reference signal receive power corresponding to the to-be-tested device; or
an SSB index corresponding to the to-be-tested device.

54. The method according to claim 38, wherein the first location information is determined by using a location calculation unit, and the location calculation unit is located in an auxiliary positioning device or a third-party device that provides a positioning service.

55. The method according to claim 38, wherein a transmission resource pool of the positioning reference signal is configured by the network side device, and a configuration manner comprises at least one of the following:

configuring, by the network side device, a transmission resource according to an **ID** of the first auxiliary positioning device that is reported by the to-be-tested device; or
configuring, by the network side device, a transmission resource according to second location information of the to-be-tested device.

56. The method according to claim 38, wherein a transmission resource pool of the positioning reference signal is configured by the first auxiliary positioning device, and a manner of determining the transmission resource pool comprises at least one of the following:

the transmission resource pool is determined according to an ID of a zone where the first auxiliary positioning device is located;
the transmission resource pool is determined according to an SSB index of the first auxiliary positioning device;
the transmission resource pool is determined according to timing advance of the first auxiliary positioning device; or
the transmission resource pool is determined according to an ID of the first auxiliary positioning device.

57. The method according to claim 39, wherein the second relative location information is determined according to location information of the first auxiliary positioning device, and the method further comprises:
receiving the location information of the first auxiliary positioning device.

58. The method according to claim 39, wherein a distance between the to-be-tested device and the first auxiliary positioning device is d, a location of the first auxiliary positioning device is indicated by $(x_1, y_1)$, a location of the to-be-tested device calculated according to the first relative location information, the second relative location information and the third relative location information is indicated by $(x_2, y_2)$, and the first location information $(x, y)$ meets the following condition:

$$\begin{cases} x = x_1 + d \frac{x_2 - x_1}{\sqrt{(x_2 - x_1)^2 + (y_2 - y_1)^2}} \\ y = y_1 + d \frac{y_2 - y_1}{\sqrt{(x_2 - x_1)^2 + (y_2 - y_1)^2}} \end{cases}.$$

59. A positioning apparatus, wherein the apparatus is a first auxiliary positioning device, and the first auxiliary positioning device comprises:

a determining unit, determining a positioning reference signal, wherein the positioning reference signal is used to determine first relative location information of the first auxiliary positioning device and a to-be-tested device; and
a communications unit, sending or measuring the positioning reference signal by using a sidelink,
wherein the first relative location information is used to determine first location information of the to-be-tested device.

60. A positioning apparatus, wherein the apparatus is a to-be-tested device, and the to-be-tested device comprises:

a determining unit, determining a positioning reference signal, wherein the positioning reference signal is used to determine first relative location information of a first auxiliary positioning device and the to-be-tested device; and
a communications unit, measuring or sending the positioning reference signal by using a sidelink,
wherein the first relative location information is used to determine first location information of the to-be-tested device.

61. A positioning apparatus, wherein the apparatus is a network side device, and the network side device comprises:

a receiving unit, receiving first relative location information of a first auxiliary positioning device and a to-be-tested device, wherein the first relative location information is used to determine first location information of the to-be-tested device,
wherein the first relative location information is determined based on a positioning reference signal, and the positioning reference signal is transmitted by using a sidelink.

62. A communications apparatus, comprising a memory and a processor, wherein the memory is configured to store a program, and the processor is configured to invoke the program in the memory to perform the method according to any one of claims 1 to 58.

63. A communications apparatus, comprising a processor, invoking a program from a memory to perform the method according to any one of claims 1 to 58.

64. A chip, comprising a processor, invoking a program from a memory, to cause a device installed with the chip to perform the method according to any one of claims 1 to 58.

65. A computer readable storage medium storing a program, wherein the program causes a computer to perform the method according to any one of claims 1 to 58.

66. A computer program product, comprising a program, wherein the program causes a computer to perform the method according to any one of claims 1 to 58.

67. A computer program, wherein the computer program causes a computer to perform the method according to any one of claims 1 to 58.

**100**

FIG. 1

**200**

FIG. 2

First auxiliary
positioning device

to-be-tested
device

S310, determine a positioning
reference signal

S320, send or measure the
positioning reference signal by
using a sidelink

FIG. 3

first auxiliary
positioning device

to-be-tested
device

S410, determine a
positioning reference
signal

S420, send or measure the
positioning reference signal by
using a sidelink

FIG. 4

A network device receives first relative location
information of a first auxiliary device and a to-be-
tested device

S510

FIG. 5

```
    ┌─────────────┐      ┌─────────────────┐      ┌──────────────────┐
    │ to-be-tested│      │ auxiliary       │      │ Network device or│
    │   device    │      │ positioning     │      │ positioning server│
    └─────────────┘      │    device       │      └──────────────────┘
                         └─────────────────┘
```

to-be-tested device

auxiliary positioning device

Network device or positioning server

S610, estimate a location relative to a network device

S610, estimate a location relative to an auxiliary positioning device

S620

S630, estimate a location relative to a network device

S630, estimate a location relative to a to-be-tested device

S640

S650, estimate a location relative to an auxiliary positioning device

S650, estimate a location relative to a to-be-tested device

S660

S660

S670, perform location calculation

FIG. 6

FIG. 7

FIG. 8

FIG. 9

apparatus 1000

receiving unit 1010

FIG. 10

Apparatus 1100

processor
1110

memory
1120

transceiver
1130

FIG. 11

## INTERNATIONAL SEARCH REPORT

| International application No. |
|---|
| **PCT/CN2023/082148** |

**A. CLASSIFICATION OF SUBJECT MATTER**

H04W64/00(2009.01)i

According to International Patent Classification (IPC) or to both national classification and IPC

**B. FIELDS SEARCHED**

Minimum documentation searched (classification system followed by classification symbols)

IPC:H04W; H04Q; H04L

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; 3GPP; CJFD; IEEE; CNKI; CNABS: 辅助, 定位, 参考信号, 相对位置, 测量, 侧行链路, 侧链路, 标识, 距离, 导频, 索引, 扰码, assistance, positioning, reference signal, relative position, measurement, sidelink, identity, distance, pilot, index, scrambling code

**C. DOCUMENTS CONSIDERED TO BE RELEVANT**

| Category* | Citation of document, with indication, where appropriate, of the relevant passages | Relevant to claim No. |
|---|---|---|
| X | CN 109842934 A (BEIJING SAMSUNG COMMUNICATION TECHNOLOGY RESEARCH CO., LTD.; SAMSUNG ELECTRONICS CO., LTD.) 04 June 2019 (2019-06-04) <br> see description, paragraphs [0007]-[0106] | 1-67 |
| X | CN 114222931 A (BEIJING XIAOMI MOBILE SOFTWARE CO., LTD.) 22 March 2022 (2022-03-22) <br> see description, paragraphs [0007]-[0066] | 1-67 |
| X | CN 114449653 A (APPLE INC.) 06 May 2022 (2022-05-06) <br> see description, paragraphs [0007]-[0057] | 1-67 |
| X | CN 106662634 A (INTEL CORP.) 10 May 2017 (2017-05-10) <br> see description, paragraphs [0007]-[0048] | 1-67 |
| X | WO 2022010910 A1 (QUALCOMM INC.) 13 January 2022 (2022-01-13) <br> see description, paragraphs [0007]-[0039] | 1-67 |
| A | WO 2022197729 A1 (QUALCOMM INC.) 22 September 2022 (2022-09-22) <br> entire document | 1-67 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 August 2023** | **31 August 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/082148**

| Patent document cited in search report | | | Publication date (day/month/year) | Patent family member(s) | | | Publication date (day/month/year) |
|---|---|---|---|---|---|---|---|
| CN | 109842934 | A | 04 June 2019 | None | | | |
| CN | 114222931 | A | 22 March 2022 | None | | | |
| CN | 114449653 | A | 06 May 2022 | None | | | |
| CN | 106662634 | A | 10 May 2017 | EP | 3198897 | A1 | 02 August 2017 |
| | | | | EP | 3198897 | B1 | 12 January 2022 |
| | | | | JP | 2017527806 | A | 21 September 2017 |
| | | | | WO | 2016048509 | A1 | 31 March 2016 |
| | | | | US | 2016095080 | A1 | 31 March 2016 |
| | | | | US | 9713117 | B2 | 18 July 2017 |
| WO | 2022010910 | A1 | 13 January 2022 | KR | 20230036080 | A | 14 March 2023 |
| | | | | EP | 4179803 | A1 | 17 May 2023 |
| | | | | US | 2022015057 | A1 | 13 January 2022 |
| | | | | US | 11595931 | B2 | 28 February 2023 |
| WO | 2022197729 | A1 | 22 September 2022 | TW | 202243501 | A | 01 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022116524800